# EUROPEAN PATENT APPLICATION

(11) **EP 4 841 414 A1**
(43) Date of publication of application: **18.11.2026**
(21) Application number: 26175065.7
(22) Date of filing: 28.04.2026
(51) Int. Cl.: G06F 3/04847, G06F 3/12, G06F 3/0484

(54) **IMAGE FORMING APPARATUS AND CONTROL METHOD FOR IMAGE FORMING APPARATUS**

(30) Priority: 14.05.2025 JP 2025081452
(71) Applicant: Sharp Kabushiki Kaisha, Sakai City, Osaka 590-8522 (JP)
(72) Inventor: KUBOTA, Kazuhisa, Osaka, 590-8522 (JP)
(74) Representative: Müller Hoffmann & Partner

(57) **Abstract**

An image forming apparatus of the disclosure includes a controller and a display, and is equipped with a plurality of print functions for printing a file selected on an operation screen. The controller displays a plurality of setting screens, respectively corresponding to the plurality of print functions on the display. At least one of the plurality of setting screens includes a first User Interface (UI) component related to a setting of enabling or disabling a function for setting the number of copies to be printed, and a second UI component related to a setting of the number of copies to be printed.

## Description

### Technical Field

The disclosure relates to an image forming apparatus and the like.

### Background Art

Some of the image forming apparatuses, such as a Multi-Function Peripheral/Printer (MFP), have a plurality of print functions similar to each other. Operations of this type of image forming apparatus are likely to be complicated.

For example, JP 2017-170878 A discloses that a plurality of display components corresponding to a plurality of setting items related to respective functions of an image forming apparatus are displayed on a UI screen for a user based on a setting of display/non-display that is set by an administrator.

### Summary of Invention

### Technical Problem

An issue to be solved by the disclosure is an improvement in operability of an image forming apparatus.

### Solution to Problem

The disclosure provides an image forming apparatus that is equipped with a plurality of print functions for printing a file selected on an operation screen and includes one or more controllers and a display. The one or more controllers display a plurality of setting screens respectively corresponding to the plurality of print functions on the display. At least one of the plurality of setting screens includes a first User Interface (UI) component related to a setting of enabling or disabling a function for setting the number of copies to be printed, and a second UI component related to a setting of the number of copies to be printed.

Further, the disclosure provides a control method for an image forming apparatus including a display and equipped with a plurality of print functions for printing a file selected on an operation screen. The method includes displaying a plurality of setting screens respectively corresponding to the plurality of print functions on the display. At least one of the plurality of setting screens includes a first User Interface (UI) component related to a setting of enabling or disabling a function for setting the number of copies to be printed, and a second UI component related to a setting of the number of copies to be printed.

### Advantageous Effects of Disclosure

According to the disclosure, operability of an image forming apparatus can be improved.

### Brief Description of the Drawings

FIG. 1 is a schematic conceptual diagram of a system according to a first embodiment of the disclosure.
FIG. 2 is a block diagram of an MFP according to the first embodiment of the disclosure.
FIG. 3 is a block diagram of a controller of the MFP according to the first embodiment of the disclosure.
FIG. 4 is a block diagram of a storage of the MFP according to the first embodiment of the disclosure.
FIG. 5 is a flow chart for describing the operation of the MFP according to the first embodiment of the disclosure.
FIG. 6 is a diagram for describing an example of screen transition in a general USB direct print function.
FIG. 7 is a diagram for describing an example of screen transition in a general hold print function.
FIG. 8 is a flow chart for describing USB direct print processing of the MFP according to the first embodiment of the disclosure.
FIG. 9 is a flow chart for describing hold print processing of the MFP according to the first embodiment of the disclosure.
FIG. 10A is an example of a home screen displayed on a display of the MFP according to the first embodiment of the disclosure.
FIG. 10B is an example of a screen that is displayed on the display of the MFP according to the first embodiment of the disclosure, and is an example of a file selection screen in the USB direct print processing.
FIG. 10C is an example of a screen that is displayed on the display of the MFP according to the first embodiment of the disclosure, and is an example of a setting menu screen in the USB direct print processing.
FIG. 11A is an example of a screen that is displayed on the display of the MFP according to the first embodiment of the disclosure, and is an example of a setting menu screen in the USB direct print processing.
FIG. 11B is an example of a screen that is displayed on the display of the MFP according to the first embodiment of the disclosure, and is an example of a setting screen of duplex printing.
FIG. 11C is an example of a screen that is displayed on the display of the MFP according to the first embodiment of the disclosure, and is an example of a number-of-copies setting screen.
FIG. 12A is an example of a screen that is displayed on the display of the MFP according to the first embodiment of the disclosure, and is an example of a setting screen for sheet selection.
FIG. 12B is an example of a screen that is displayed on the display of the MFP according to the first embodiment of the disclosure, and is an example of a sort/group setting screen.
FIG. 12C is an example of a screen that is displayed on the display of the MFP according to the first embodiment of the disclosure, and is an example of a USB flash drive connection screen.
FIG. 13A is an example of a screen that is displayed on the display of the MFP according to the first embodiment of the disclosure, and is an example of a home screen.
FIG. 13B is an example of a screen that is displayed on the display of the MFP according to the first embodiment of the disclosure, and is an example of a file selection screen in the hold print processing.
FIG. 13C is an example of a screen that is displayed on the display of the MFP according to the first embodiment of the disclosure, and is an example of a setting menu screen in the hold print processing.
FIG. 14A is another example of a setting menu screen in the hold print processing that is displayed on the display of the MFP according to the first embodiment of the disclosure, and is an example of a case where "change number of copies" is turned on.
FIG. 14B is another example of a setting menu screen in the hold print processing that is displayed on the display of the MFP according to the first embodiment of the disclosure, and is an example of a case where the setting of the number of copies is changed after "change number of copies" is turned on.
FIG. 15 is a diagram for describing screen transition that is displayed on the display of the MFP according to the first embodiment of the disclosure, where a setting menu screen in the USB direct print processing is set in the center.
FIG. 16 is a diagram for describing screen transition that is displayed on the display of the MFP according to the first embodiment of the disclosure, where a setting menu screen in the hold print processing is set in the center.
FIG. 17 is a diagram for describing an example of screen transition that the MFP according to the first embodiment of the disclosure displays on the display in the USB direct print processing.
FIG. 18 is a diagram for describing an example of screen transition that the MFP according to the first embodiment of the disclosure displays on the display in the hold print processing.
FIG. 19 is a flow chart for describing hold print processing of an MFP according to a second embodiment of the disclosure.
FIG. 20A is an example of a print setting screen that is displayed on a display of the MFP according to the second embodiment of the disclosure in the hold print processing.
FIG. 20B is an example of a print setting screen that is displayed on the display of the MFP according to the second embodiment of the disclosure in the hold print processing.
FIG. 20C is an example of a print setting screen that is displayed on the display of the MFP according to the second embodiment of the disclosure in the hold print processing.
FIG. 21 is an example of a print setting screen that is displayed on the display of the MFP according to the second embodiment of the disclosure in the hold print processing.
FIG. 22A is an example of a print setting screen that is displayed on the display of the MFP according to the second embodiment of the disclosure in the hold print processing.
FIG. 22B is an example of a print setting screen that is displayed on the display of the MFP according to the second embodiment of the disclosure in the hold print processing.
FIG. 22C is an example of a print setting screen that is displayed on the display of the MFP according to the second embodiment of the disclosure in the hold print processing.
FIG. 23 is a diagram for describing an example of screen transition that the MFP according to the second embodiment of the disclosure displays on the display in the hold print processing.
FIG. 24 is a diagram for describing an example of screen transition that the MFP according to the second embodiment of the disclosure displays on the display in the hold print processing.
Description of Embodiments

Some of the image forming apparatuses have similar print functions, such as a Universal Serial Bus (USB) direct print function for directly printing data saved in a USB flash drive and a hold print function (held-data print function) for printing data saved (held) in the image forming apparatus. Print setting screens of such similar print functions are required not to make a user confused by a different UI of the print setting screen for each print function, and are also required to be provided so that an optimum print setting can be made for each print function.

In the disclosure, for example, in an image forming apparatus having a plurality of print functions similar to each other, while screen configurations of print setting screens are made to be common regardless of the print functions, the display of a UI component related to a specific setting is controlled for each print function, thereby providing a print setting screen capable of an optimal print setting without impairing operability of the print setting screen for each print function.

Hereinafter, embodiments of a case in which an image forming apparatus of the disclosure is applied to a Multi-Function Printer/Peripheral (MFP) will be described. Note that the embodiments to be described below are merely examples for explaining the disclosure described in the claims, and the technical scope of the disclosure is not limited to the descriptions of these embodiments.

### 1. First Embodiment

### 1.1 Overall Configuration

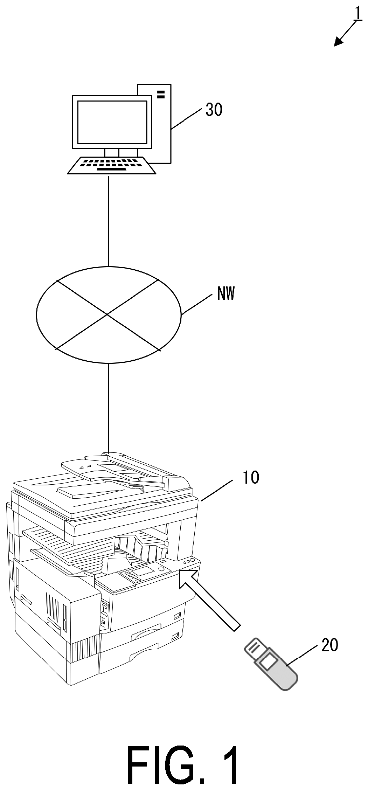

FIG. 1 is a schematic conceptual diagram of a system 1 according to a first embodiment of the disclosure. The system 1 includes an MFP 10, a USB flash drive 20, and a client terminal 30. The MFP 10 and the client terminal 30 are connected via a network NW to enable data communication. Although only one client terminal 30 is illustrated in FIG. 1, two or more client terminals 30 may be provided.

The MFP 10 is an image forming apparatus, an image processing apparatus, or an information processing apparatus, which is also called a multifunction apparatus, and typically has a copy function, an image scanner function, a facsimile function, and a printer function. The MFP 10 may further have other functions, and for example, may have an email sending and receiving function, a file server function, and the like.

The USB flash drive 20 is an external storage device that can be connected to the MFP 10 via a connector 150 to be described below. Instead of the USB flash drive 20, another type of external storage device may be provided. Examples of another type of external storage device include a Hard Disk Drive (HDD) and a Solid State Drive (SSD).

The client terminal 30 is an information processing apparatus capable of transmitting print data to the MFP 10 via the network NW. The client terminal 30 is typically a desktop computer, a laptop computer, or a workstation, or may be, for example, an information processing apparatus such as a tablet or a smartphone. A printer driver for using the MFP 10 as a network printer may be installed in the client terminal 30. In this case, the client terminal 30 transmits print data and a print command to the MFP 10 by using the printer driver.

The network NW is a network capable of data communication, such as a Local Area Network (LAN), the Internet, or a mobile communication network. A transmission medium of the network NW may be a wired or wireless medium, or may be a mixture of wired and wireless media. The network NW may be configured by a single network or may be configured by a plurality of networks. For example, the MFP 10 and the client terminal 30 may be connected to different LANs, and these LANs may be connected via the Internet.

The MFP 10 has a USB direct print function and a hold print function. The USB direct print function is a function of directly reading print data from the USB flash drive 20 connected to a USB interface (connector 150) of the MFP 10 and printing the read print data without using a personal computer or the like (e.g., the client terminal 30). The hold print function is a function of temporarily storing (holding) print data received from the client terminal 30 via the network NW, image data read via an image inputter 160 of the MFP 10, or the like in a hold queue (storage) without immediately printing the above data, and printing the data in accordance with operations at an operation inputter 130.

### 1.2 Hardware Configuration

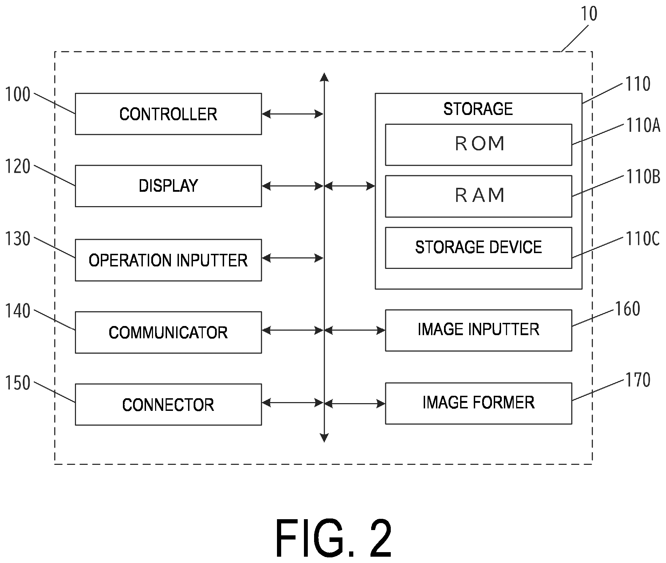

FIG. 2 is a block diagram of the MFP 10 according to the first embodiment of the disclosure.

A controller 100 controls the entire MFP 10. The controller 100 includes one or more control apparatuses or control circuits, and includes, for example, a Central Processing Unit (CPU), which is a processor that executes various arithmetic processes, a System on a Chip (SoC), and the like.

In addition, the controller 100 can enable functions by reading programs stored in a storage 110 and executing processing.

The storage 110 stores various programs and various types of data necessary for the operation of the MFP 10. The storage 110 includes, for example, a ROM 110A, a RAM 110B, and a storage device 110C. The ROM 110A is a Read Only Memory, and stores, for example, a Basic Input/Output System (BIOS) and firmware. The ROM 110A is used as a main storage device of the controller 100. The RAM 110B is a storage device capable of temporarily storing data, such as a Dynamic Random Access Memory (DRAM). The storage device 110C is a non-temporary storage device such as an SSD constituted by a semiconductor memory or an HDD constituted by a magnetic disk. The storage 110 includes one or more ROMs 110A, one or more RAMs 110B, and one or more storage devices 110C. Further, for convenience of explanation, the storage 110 is configured as one unit, but the storage 110 may be configured as separate apparatuses for each purpose, such as an area used for execution of programs (main storage area), an area that stores programs or data (auxiliary storage area), and an area used for caching.

A display 120 displays images, characters, and the like. For example, the display 120 is configured to include a Liquid Crystal Display (LCD), an organic Electro-Luminescence (EL) panel, or the like. The display 120 may be a single display apparatus, or may further include a display apparatus connected to the outside.

The operation inputter 130 accepts operations input from a user. For example, the operation inputter 130 is composed of hardware keys and/or software keys. Further, the operation inputter 130 includes task keys for instructing to execute tasks such as fax transmission and image reading, and operation keys such as a cancel key for instructing to cancel an operation, for example. The operation inputter 130 can be configured as a touch panel that can receive input via the display 120. When the operation inputter 130 is configured as the touch panel, the operation inputter can detect a user's touch, tap, swipe, or the like with respect to an object displayed via the display 120, and can acquire a coordinate position, pressure-sensitive information, or the like of touch panel information. In this case, as an input scheme for the touch panel, a general input scheme such as a resistive film scheme, an infrared scheme, an electromagnetic induction scheme, or a capacitive scheme can be adopted, for example.

A communicator 140 connects with the network NW. For example, the communicator 140 is composed of an interface connectible to a wired LAN, a wireless LAN, or a Long Term Evolution (LTE) network. The communicator 140 is connected to a network for connection to another apparatus or an external network. In addition, the communicator 140 may be an interface for short-distance wireless communication such as Near Field Communication (NFC) or Bluetooth (trade name), for example.

The connector 150 connects the MFP 10 to other devices. For example, the connector 150 is a USB interface to which the USB flash drive 20 or the like is connected. Further, the connector 150 may be an interface such as HDMI (trade name), in addition to the USB interface.

The image inputter 160 reads an image (document) and outputs the image as image data. The image inputter 160 includes a typical scanner (image input apparatus). For example, the image inputter 160 may receive image data that is input from an external storage medium such as the USB flash drive 20 or may receive image data via the network.

An image former 170 forms (prints) an image on a print medium such as a copy sheet based on the image data. A printing scheme for the image former 170 is freely selected, and may be, for example, any of an inkjet printer, a laser printer, a thermal transfer printer, and the like. The image former 170 may be a monochrome printer or a color printer. The image former 170 includes one or more sheet holders (also referred to as feed trays) that store print media and supply the print media for image formation. The image former 170 includes a feeding mechanism that feeds print media from one or more sheet holders. The image former 170 may further include a sorter mechanism that sorts the print media after image formation, and the like.

### 1.3 Software Configuration

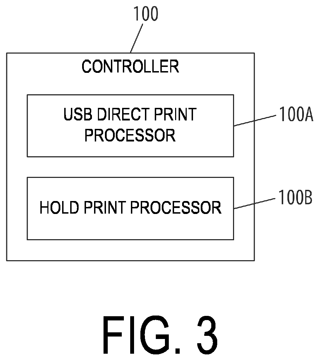

FIG. 3 is a block diagram of the controller 100 of the MFP 10 according to the first embodiment of the disclosure. As described above, the controller 100 enables various functions by reading programs stored in the storage 110 and executing processing, and includes, as these functions, a USB direct print processor 100A and a hold print processor 100B.

The USB direct print processor 100A executes processing for enabling the USB direct print function. The USB direct print processor 100A displays, for example, a print setting screen for the USB direct print function on the display 120, and updates setting information stored in a USB direct print setting storage area 110-1, which will be described below, based on a setting change accepted via the operation inputter 130. When it is detected that the USB flash drive 20 is connected to the connector 150, for example, the USB direct print processor 100A displays a message for telling the connection of the USB flash drive 20 on the display 120. The USB direct print processor 100A displays, for example, a list of print data stored in the USB flash drive 20 on the display 120. Further, when the USB direct print processor 100A receives an instruction to print the print data stored in the USB flash drive 20 via the operation inputter 130, for example, the USB direct print processor 100A forms an image corresponding to the print data on a print medium using the image former 170.

The hold print processor 100B executes processing for enabling the hold print function. The hold print processor 100B displays, for example, a print setting screen for the hold print function on the display 120.

The hold print processor 100B stores, for example, print data received from the client terminal 30 via the network NW and image data read via the image inputter 160 in a hold print data storage area 110-5 to be described below. The print data may include setting information related to printing. The setting information may include, for example, whether the printing is duplex printing or single-sided printing, whether the printing is color printing or monochrome printing, the number of copies to be printed, a method of sorting the printed matter (sorting, grouping, or the like), a sheet size, a sheet type, the designation of a feed tray, and the designation of a sheet discharge tray. Further, the setting information may include terminal identification information of the client terminal 30 having generated the corresponding print data and print command, user identification information of a user who has logged in to the client terminal 30 when the print data and print command are generated, and time information indicating a time when the print data and print command are generated.

The hold print processor 100B updates, for example, setting information stored in a hold print setting storage area 110-3, which will be described below, based on the setting change received via the operation inputter 130.

Further, the hold print processor 100B forms, for example, in accordance with the print data, the print command, and the setting information stored in the hold print data storage area 110-5, and the operation received via the operation inputter 130, an image corresponding to the print data using the image former 170 on a print medium.

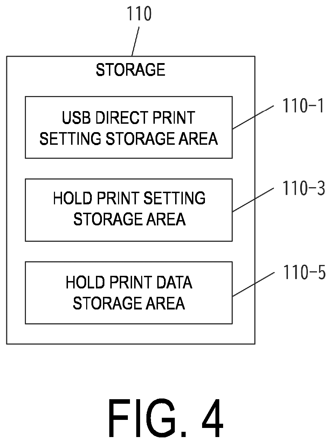

FIG. 4 is a block diagram of the storage 110 of the MFP 10 according to the first embodiment of the disclosure. The storage 110 secures the USB direct print setting storage area 110-1, the hold print setting storage area 110-3, and the hold print data storage area 110-5. These storage areas are secured in the ROM 110A, RAM 110B, or storage device 110C.

The USB direct print setting storage area 110-1 is an area for storing setting information regarding the USB direct print function. The USB direct print setting storage area 110-1 may store setting information related to various print settings when printing is performed by the USB direct print function, for example. The setting information stored in the USB direct print setting storage area 110-1 may include, for example, whether the printing is duplex printing or single-sided printing, whether the printing is color printing or monochrome printing, the number of copies to be printed, the sheet size, the sheet type, the designation of a feed tray, and the designation of a sheet discharge tray.

The hold print setting storage area 110-3 is an area for storing setting information regarding the hold print function. The hold print setting storage area 110-3 stores, for example, the setting information received from the client terminal 30. The hold print setting storage area 110-3 stores the setting information having been updated based on the setting change via the operation inputter 130.

### 1.4 Operation

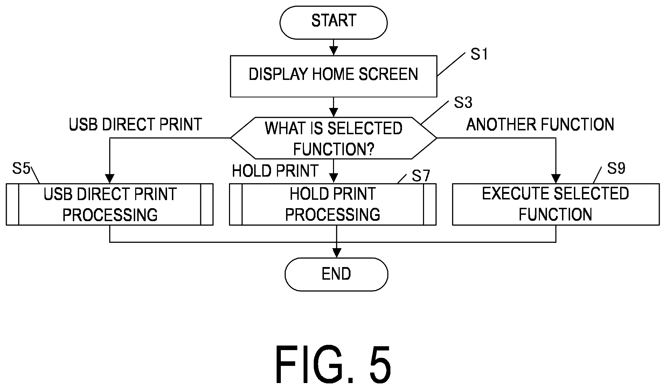

FIG. 5 is a flow chart for describing the operation of the MFP 10 according to the first embodiment of the disclosure. It is preferable that the following processing be appropriately executed by any of the configurations described in FIG. 3; however, for convenience of description, the description will be given assuming that the following processing is executed by the controller 100.

First, the controller 100 displays a home screen on the display 120 (S1). The home screen is a screen displayed when a home button is selected after the MFP 10 is activated, after the MFP 10 is returned from an energy-saving state, or while another screen is being displayed, and is a screen for displaying various functions of the MFP 10 to the user and allowing the user to select a function to be executed.

Next, the controller 100 determines the function selected from the home screen by the user via the operation inputter 130 (S3).

When it is determined that the user has selected the USB direct print function (S3, "USB DIRECT PRINT"), the controller 100 executes the USB direct print processing (S5).

When it is determined that the user has selected the hold print function (S3, "HOLD PRINT"), the controller 100 executes the hold print processing (S7).

When it is determined that the user has selected another function (S3, "ANOTHER FUNCTION"), the controller 100 executes the function selected by the user (S9).

### 1.5 Example of General Screen Transition

Prior to the description of screen transition according to the first embodiment, an example of a general screen transition will be described.

### 1.5.1 Example of Screen Transition of General USB Direct Print Processing

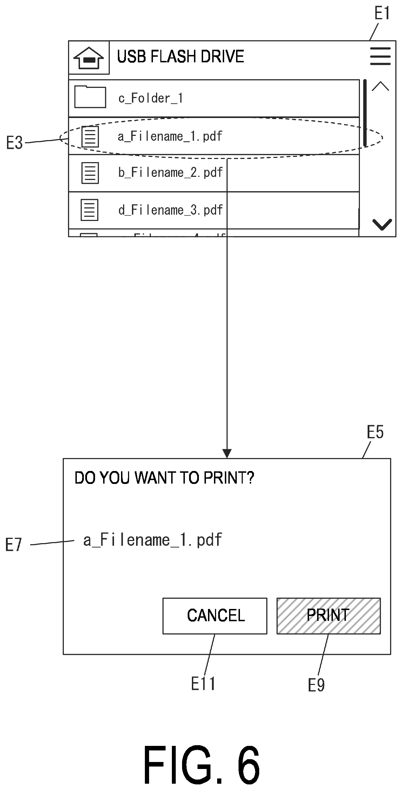

FIG. 6 is a diagram for describing an example of screen transition in general USB direct print processing. This screen transition is an example of a case where general USB direct print processing is executed in S5 of the flow chart of FIG. 5.

When the USB direct print function is selected (S3, "USB DIRECT PRINT") on the home screen in a state where the USB flash drive 20 is connected to the connector 150, a screen E1 is displayed. The USB direct print function may be selected on a screen other than the home screen. On the screen E1, three files "a_Filename_1.pdf', "b_Filename_2.pdf', and "c_Filename_3.pdf' stored in a folder "c_Folder_1" are displayed. When the user performs an operation of selecting an area E3 via the operation inputter 130, the controller 100 causes the screen displayed on the display 120 to transition from the screen E1 to a screen E5. On the screen E5, a filename E7 of the file "a_Filename_1.pdf' displayed in the area E3 is displayed, and a print button E9 and a cancel button E11 are further displayed. When the USB direct print function is selected on the home screen in a state where the USB flash drive 20 is not connected to the connector 150, the controller 100 may display a message prompting the user to connect the USB flash drive 20 to the connector 150 on the display 120.

Thereafter, when the print button E9 is operated (selected for instruction) via the operation inputter 130, the controller 100 prints the file "a_Filename_1.pdf' displayed in the filename E7 by using the image former 170. When the cancel button E11 is operated via the operation inputter 130, the controller 100 causes the screen displayed on the display 120 to transition from the screen E5 to the screen E1.

### 1.5.2 Example of Screen Transition of General Hold Print Processing

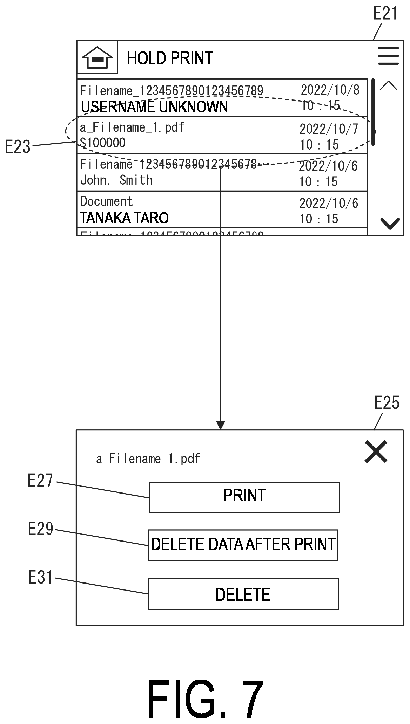

FIG. 7 is a diagram for describing an example of screen transition in general hold print processing. This screen transition is an example of a case where general hold print processing is executed in S7 of the flow chart of FIG. 5.

When the hold print function is selected (S3, "HOLD PRINT") on the home screen, a screen E21 is displayed. The screen E21 is a screen for displaying a list of print files stored in the hold print data storage area 110-5, and displays three print files "Filename_1234567890123456789", "a_Filename_1.pdf", and "Filename_123456789012345678 " having been received from the client terminal 30.

When the user performs an operation of selecting an area E23 via the operation inputter 130, the controller 100 causes the screen displayed on the display 120 to transition from the screen E21 to a screen E25. On the screen E25, buttons E27, E29, and E31 are displayed in a selectable manner for three operations to be performed on the file "a_Filename_1.pdf' displayed in the area E23.

When the button E27 is operated, the controller 100 prints the file "a_Filename_1.pdf' by using the image former 170. When the button E27 is operated, the file "a_Filename_1.pdf" is stored in the hold print data storage area 110-5 even after being printed.

When the button E29 is operated, the controller 100 prints the file "a_Filename_1.pdf' by using the image former 170, and then deletes the printed file "a_Filename_1.pdf' from the hold print data storage area 110-5.

When the button E31 is operated, the controller 100 deletes the file "a_Filename_1.pdf" from the hold print data storage area 110-5. When the button E31 is operated, the file "a_Filename_1.pdf' is not printed.

### 1.6 Operation of USB Direct Print Processing in First Embodiment

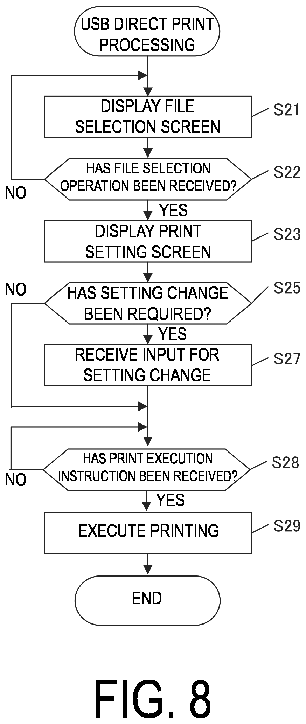

FIG. 8 is a flow chart for describing the USB direct print processing of the MFP 10 according to the first embodiment of the disclosure. The MFP 10 according to the first embodiment executes this processing as the USB direct print processing (S5) in the flow chart of FIG. 5.

When the USB direct print processing is started in the state where the USB flash drive 20 is connected to the connector 150, the controller 100 displays a file selection screen on the display 120 (S21). The file selection screen is a screen for displaying a list of files stored in the USB flash drive 20. The controller 100 may display only files having extensions printable by the image former 170 on the list. When the USB direct print processing is to be started in a state where the USB flash drive 20 is not connected to the connector 150, the controller 100 may display a message prompting the user to connect the USB flash drive 20 to the connector 150 on the display 120.

When an operation of selecting a file to be printed from among the files displayed on the file selection screen is received via the operation inputter 130 (S22, YES), the controller 100 displays a print setting screen (S23). When the operation of selecting the file to be printed has not been received on the file selection screen (S22, NO), the display of the file selection screen is continued (S21). The print setting screen is a screen for performing various settings regarding the USB direct print function. On the print setting screen, for example, duplex printing/single-sided printing, sheet selection, color printing/monochrome printing, and sorting/grouping may be set. Sorting is a function of sorting and outputting, one by one, a read document of a plurality of pages in the order of page numbers. Grouping is a function of outputting a read document of a plurality of pages in a batch for each page.

When an operation to change the setting has been received via the operation inputter 130 (S25, YES), the controller 100 receives input for changing the setting via the operation inputter 130 (S27), and determines whether an instruction to execute printing has been received (S28). When the operation to change the setting has not been received via the operation inputter 130 (S25, NO), the controller 100 determines whether an instruction to execute printing has been received (S28). When the instruction to execute printing has been received (S28, YES), the controller 100 executes printing (S29). When the print execution instruction has not been received (S28, NO), the controller 100 waits until the print execution instruction has been received.

### 1.7 Operation of Hold Print Processing in First Embodiment

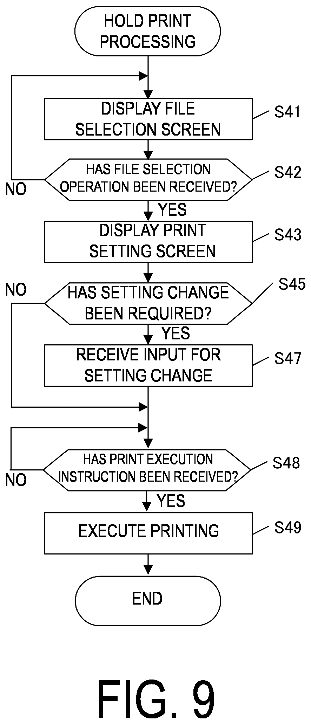

FIG. 9 is a flow chart for describing the hold print processing of the MFP 10 according to the first embodiment of the disclosure. The MFP 10 according to the first embodiment executes this processing as the hold print processing (S7) in the flow chart of FIG. 5.

When the hold print processing is started, the controller 100 displays a file selection screen on the display 120 (S41). The file selection screen is a screen for displaying a list of files stored in the hold print data storage area 110-5.

When an operation of selecting a file to be printed from among the files displayed on the file selection screen is received via the operation inputter 130 (S42, YES), the controller 100 displays a print setting screen (S43). When the operation of selecting the file to be printed has not been received on the file selection screen (S42, NO), the display of the file selection screen is continued (S41). The print setting screen is a screen for various settings regarding the hold print function. On the print setting screen, for example, color printing/monochrome printing, ON/OFF of deletion after printing, and the change of the number of copies may be set. When the deletion after printing is ON, the controller 100 deletes the printed file from the hold print data storage area 110-5. When the deletion after printing is OFF, the printed file remains as is in the hold print data storage area 110-5.

When an operation to change the setting has been received via the operation inputter 130 (S45, YES), the controller 100 receives input for changing the setting via the operation inputter 130 (S47), and determines whether an instruction to execute printing has been received (S48). When the operation to change the setting has not been received via the operation inputter 130 (S45, NO), the controller 100 determines whether an instruction to execute printing has been received (S48). When the instruction to execute printing has been received (S48, YES), the controller 100 executes printing (S49). When the print execution instruction has not been received (S48, NO), the controller 100 waits until the print execution instruction has been received.

1.8 Screen Example of USB Direct Print Processing in First Embodiment

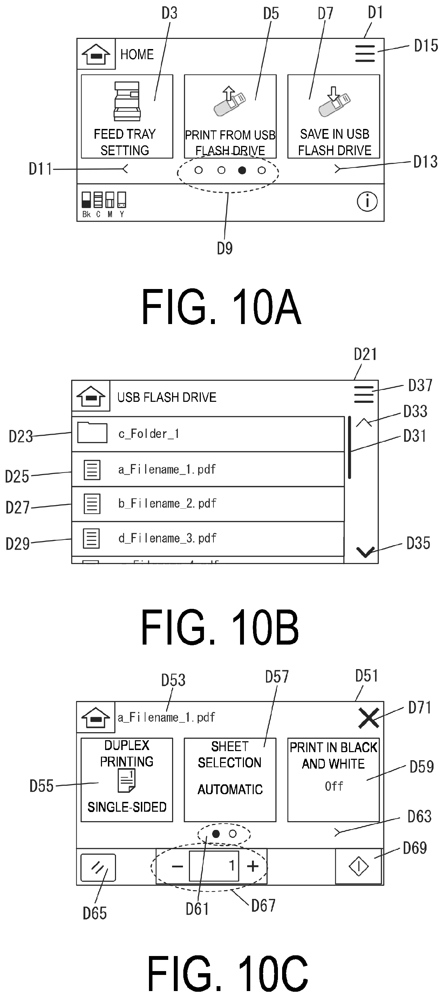

FIG. 10 is examples of a screen displayed on the display 120 of the MFP 10 according to the first embodiment of the disclosure. A screen D1 of FIG. 10A is an example of a home screen. The screen D1 displays, as UI components, buttons D3, D5, and D7, a page display D9, arrows D11 and D13, and a menu button D15. As will be described below, the screen D1 is the third page of the home screen including four pages in total.

The button D3 is a button corresponding to the feed tray setting, and when it is operated via the operation inputter 130, the controller 100 displays a feed tray setting screen (not illustrated) on the display 120. On the button D3, "FEED TRAY SETTING" is described.

The button D5 is a button corresponding to the USB direct print function. When the button D5 is operated via the operation inputter 130 in a state where the USB flash drive 20 is connected to the connector 150, the controller 100 starts the USB direct print processing of FIG. 8 and causes the screen displayed on the display 120 to transition from the screen D1 to a screen D21 to be described below. Alternatively, when the USB flash drive 20 is connected to the connector 150 in a state not being connected with the USB flash drive 20, the controller 100 starts the USB direct print processing of FIG. 8 without waiting for the operation with respect to the button D5, and causes the screen displayed on the display 120 to transition from the screen D1 to the screen D21 to be described below. On the button D5, "PRINT FROM USB FLASH DRIVE" is described. When the USB direct print processing is to be started in the state where the USB flash drive 20 is not connected to the connector 150, the controller 100 may display a message prompting the user to connect the USB flash drive 20 to the connector 150 on the display 120.

The button D7 is a button for instructing to save a scanned image in the USB flash drive 20. In response to the operation with respect to the button D7 via the operation inputter 130, the controller 100 starts processing for saving the image having been input (scanned) by the image inputter 160 in the USB flash drive 20 connected to the connector 150.

More specifically, in response to the operation with respect to the button D7, the controller 100 may display a scan setting screen (not illustrated) on the display 120. The scan setting screen is a screen for designating an output destination of the scanned image, and includes an output destination designation display which is a field for displaying the designated output destination. The scan setting screen may include, for example, an address book button, a transmission history button, and a global address search button for designating the output destination of the scanned image. The address book button is a button for displaying a list of E-mail addresses and the like. The transmission history button is a button for displaying a list of destinations to which the scanned images were transmitted in the past. The global address search button is a button for searching for a destination to which the scanned image is output from an address book registered in an external directory service such as a Lightweight Directory Access Protocol (LDAP) server or an exchange server. However, since the USB flash drive 20 is designated as a storage destination in the operation instructed by the button D7, the address book button, the transmission history button, and the global address search button may be displayed in a state where the operation is not accepted (e.g., grayed-out display) on the scan setting screen that is displayed in response to the operation with respect to the button D7.

The button D7 may correspond to a function other than the function of a button for instructing to save the scanned image in the USB flash drive 20. For example, the button D7 may function as a button for instructing to save the data stored in the storage 110 in the USB flash drive 20 connected to the connector 150. In this case, when the button D7 is operated via the operation inputter 130, the controller 100 displays a list of files saved in the storage 110. When the operation of selecting a file from the displayed list is received via the operation inputter 130, the controller 100 stores the selected file in the USB flash drive 20.

The page display D9 indicates the number of pages constituting the print setting screen and the page number of the print setting screen that is currently displayed. Three white circles and one black circle surrounded by a broken line in FIG. 10A indicate that the print setting screen is composed of four pages (3 + 1). Of the three white circles and one black circle, the black circle arranged at the third position from the left indicates the page currently displayed, and in FIG. 10A, it is indicated that the screen D1 displays the third page.

In this case, the page of the screen D1 is a combination of the buttons arranged at the positions of the buttons D3, D5, and D7 in FIG. 10A. On each of the four pages constituting the screen D1, the buttons different from those displayed in the screen 10A are arranged at the same positions as the buttons D3, D5, and D7 arranged on the screen D1 in FIG. 10A. The buttons may be arranged at three positions side by side per page as depicted in FIG. 10A, or the buttons may be arranged at two positions side by side or at one position per page. The buttons may be arranged in any manner; they may be arranged vertically or arranged vertically and horizontally, but the button arrangement is preferably common to all pages.

The arrows D11 and D13 are UI components for moving a page to be displayed in the screen D1. When the leftward arrow D11 is operated via the operation inputter 130, a page (a screen D181 to be described below) preceding the currently displayed page is displayed. In the page preceding the current page, the black circle in the page display D9 is arranged at a position shifted to the left by one (the second from the left). When the rightward arrow D13 is operated via the operation inputter 130, a page subsequent to the currently displayed page is displayed. In the subsequent page, the black circle in the page display D9 is arranged at a position shifted to the right by one (the fourth from the left).

The menu button D15 is a UI component for displaying a menu screen. When the menu button D15 is operated via the operation inputter 130, the controller 100 displays a menu screen for setting one or more items on the display 120. The menu screen includes setting items related to the overall function of the MFP 10 and buttons corresponding to display of the current state of the MFP 10. The buttons correspond to, for example, brightness adjustment, display of the total number of used sheets, system settings, and a language setting. The brightness adjustment is a setting item for adjusting the brightness of the screen that is displayed on the display 120. The display of the total number of used sheets displays the total number of sheets output by the MFP 10 using various functions such as copying, printing, and image scanning. The system settings are setting items for setting various setting items regarding the overall operation and environment of the MFP 10, and include, for example, basic information such as a main body name, an installation location, and a machine code of the MFP 10, the current date and time, a daylight saving time setting, a sheet setting, a volume setting, an energy saving setting, and a security setting as the setting items. The system settings may include a setting of the initial value of the number of copies that is displayed in a number-of-copies input field D67 immediately after print setting screens D51 and D81 of the USB direct print to be described below are displayed. The language setting is used to set a language to be displayed on the display 120.

The screen D21 of FIG. 10B is an example of the file selection screen in the USB direct print processing. The screen D21 includes, as UI components, a folder name display D23, filename displays D25, D27 and D29, a scroll bar D31, arrows D33 and D35, and a menu button D37.

The folder name display D23 displays the name of a folder (folder name) stored in the USB flash drive 20. The folder name "c_Folder_1" is displayed in the folder name display D23.

The filename displays D25, D27, and D29, respectively, display the names of the files (filenames) stored in the USB flash drive 20. In the filename displays D25, D27, and D29, the filenames "a_Filename_1.pdf', "b_Filename_2.pdf", and "c_Filename_3.pdf' are respectively displayed. When any one of the filename displays D25, D27, and D29 (the filename display D25 in the present embodiment) is selected via the operation inputter 130, the controller 100 causes the screen displayed on the display 120 to transition from the screen D21 to the screen D51 to be described below.

The scroll bar D31, the arrow D33, and the arrow D35 are UI components for vertically scrolling the filename displays D25, D27, and D29 displayed below the folder name display D23. In the state depicted in FIG. 10B, the scroll bar D31 is located at the upper end of the movable range; at this time, of the files in the folder displayed in the folder name display D23, several files (three files in this case) from the top are displayed. By moving the scroll bar D31 downward or operating the arrow D35 via the operation inputter 130, an area below the folder name display D23 is scrolled upward, and files following these three files will be displayed.

The menu button D37 is a UI component for displaying a menu screen. When the menu button D37 is operated via the operation inputter 130, the controller 100 displays a menu screen for setting one or more items on the display 120. The menu screen displays a list of setting items related to file selection. Examples of the setting items displayed on the menu screen include a sort item setting. The sort item setting is a setting item related to the order in which the filenames of the files indicated in the filename displays D25, D27, and D29 are arranged in the screen D21. In the sort setting item, sorting of the filenames in ascending order or descending order can be set. When the ascending order is set, the filenames displayed in the filename displays D25, D27, and D29 are sorted in ascending order. When the descending order is set, the filenames displayed in the filename displays D25, D27, and D29 are sorted in descending order. For example, the screen D21 of FIG. 10B is a file selection screen in which the sort setting item is set to the ascending order, and the filename displays D25, D27, and D29 are sorted in ascending order. The menu screen preferably includes a button for transition to the screen D21.

The screen D51 of FIG. 10C is an example of the print setting screen in the USB direct print processing. The screen D51 is a setting screen corresponding to one (the USB direct print function/processing) of a plurality of the print functions (the USB direct print function/processing, the hold print function/processing). The print setting screen of the USB direct print processing is composed of two pages; the screen D51 corresponds to the first page, and the screen D81 to be described below corresponds to the second page. The screen D51 includes a filename display D53, buttons D55, D57 and D59, a page display D61, an arrow D63, a button D65, the number-of-copies input field D67, and buttons D69 and D71.

The screen D51 does not include a button D249 (first UI component) to be described below, but includes the number-of-copies input field D67 (second UI component). In this respect, the screen is also referred to as a first UI non-display setting screen. The screen D81 to be described below is a setting screen related to the printing of a file not including information about sorting of printed matter (USB direct print function/processing), and includes a sort/group setting button D85 as a UI component for setting a method of sorting the printed matter. In this respect, the screen D81 is also referred to as a second setting screen.

The filename display D53 is a field for displaying the filename of the file that is currently an operation target. In FIG. 10C, "a_Filename_1.pdf' is displayed as the filename.

The buttons D55, D57, and D59 are UI components, each of which corresponds to one setting item. The buttons D55, D57, and D59 have the same shape (square in this case) and the same size on the screen D51. The button D55 is a button for instructing the transition to a duplex print setting screen (screen D101) where whether to perform duplex printing or single-sided printing is set. The button D57 is a button for instructing the transition to a sheet selection screen (screen D141) for selecting a sheet to be used for printing. When the buttons D55 and D57 are operated via the operation inputter 130, the screen displayed on the display 120 transitions from the screen D51 to the screen D101 and to the screen D141, which will be described below. The button D59 is a button to set forced monochrome printing. When the button D59 is turned on via the operation inputter 130, the controller 100 performs monochrome printing (forced monochrome printing) using the image former 170 regardless of whether the file displayed in the filename display D53 is a color or monochrome file.

The current setting states are respectively displayed on the buttons D55, D57, and D59. In FIG. 10C, "SINGLE-SIDED" is displayed below the button D55, which indicates that the current setting state is a single-sided printing. When the button D55 is operated via the operation inputter 130, the controller 100 displays the screen D101 to be described below on the display 120. In response to the setting made in the screen D101, the display "SINGLE-SIDED" below the button D55 is switched to "DUPLEX". In FIG. 10C, "AUTOMATIC" is displayed at the center of the button D57. This display indicates that the controller 100 automatically selects a sheet based on the print data. In FIG. 10C, "OFF" is displayed at the center of the button D59. This display indicates that the above-described forced monochrome printing is not performed.

The page display D61 and the arrow D63 correspond to the page display D9 and the arrow D13, respectively. In the page display D61, a total of two circles, one black circle and one white circle, are arranged side by side, and these two circles indicate that the print setting screen of the USB direct print processing is composed of two pages. The black circle indicates a page displayed in the screen D51, and the fact that the black circle is arranged on the left side in the lateral direction indicates that the screen D51 is the first page.

The arrow D63 is a button for moving between the pages of the print setting screen of the USB direct print processing. When the arrow D63 is operated via the operation inputter 130, the screen displayed on the display 120 transitions from the screen D51 to the screen D81 to be described below. Since the print setting screen of the USB direct print processing is composed of two pages and the screen D51 is the first page of the two pages, only the arrow D63 for moving to the next page is included in the screen D51 and an arrow for moving to the previous page is not displayed.

The button D65 is a reset button. In response to the operation via the operation inputter 130, the controller 100 causes various settings regarding the USB direct print function, which are stored in the USB direct print setting storage area 110-1, to return to default values.

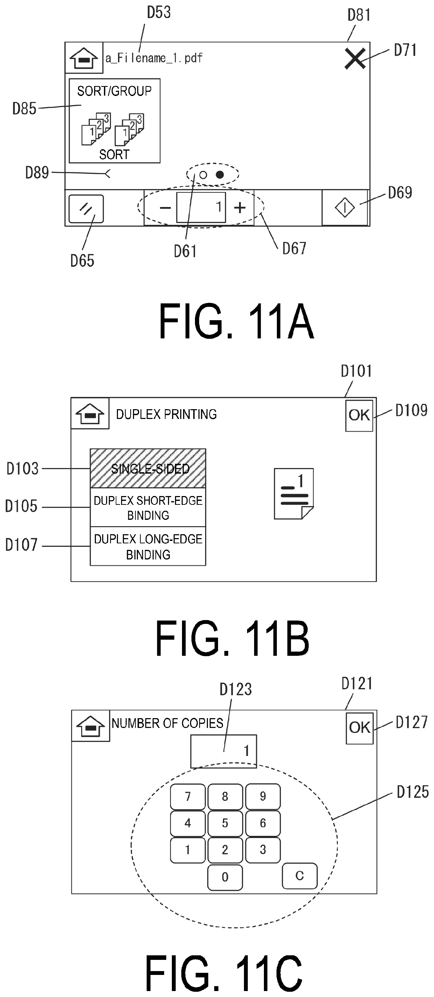

The number-of-copies input field D67 is a UI component related to the setting of the number of copies to be printed, and is also referred to as the second UI component. The number-of-copies input field D67 includes a numerical value input field for setting the number of copies to be printed, and a plus (+) button and a minus (-) button for increasing and decreasing the numerical value of the numerical value input field. In the numerical value input field, a predetermined initial value may be displayed immediately after the display of the screens D51 and D81. The initial value of the number of copies displayed in the numerical value input field may be set to any value, or may be always "1" as in the screen D51 of FIG. 10C and the screen D81 of FIG. 11A. In a case where any value is set as the initial value of the number of copies displayed in the numerical value input field, for example, a setting item for setting the initial value of the number of copies to be printed of the USB direct printing may be provided in a menu screen displayed in response to the operation with respect to the menu button D15 on the screen D1. When the number-of-copies input field D67 is operated via the operation inputter 130, the screen displayed on the display 120 transitions from the screen D51 to a screen D121 to be described below. On the screens D51 and D81, the number-of-copies input field D67 is displayed in an operable state (active state) from the beginning of the display of the screens D51 and D81. That is, the number-of-copies input field D67 is displayed in a state where a numerical value indicating the number of copies can be input therein via the operation inputter 130. Due to this, a button for setting whether or not to change the number of copies to be printed is not provided in the screens D51 and D81, as the button D249 of a print setting screen D241 of the hold print processing to be described below.

The button D69 is a print start instructing button; when the button D69 is operated via the operation inputter 130, the controller 100 executes printing by using the image former 170 in accordance with the current setting state (the setting state stored in the USB direct print setting storage area 110-1) regarding the USB direct print function.

The button D71 is a button for closing. When the button D71 is operated via the operation inputter 130, the controller 100 ends the display of the screen D51 and causes the screen displayed on the display 120 to transition from the screen D51 to the screen D21.

FIG. 11 is examples of a screen displayed on the display 120 of the MFP 10 according to the first embodiment of the disclosure. The screen D81 of FIG. 11A is an example of the print setting screen in the USB direct print processing. The print setting screen of the USB direct print processing is composed of two pages; the above-described screen D51 corresponds to the first page, and the screen D81 corresponds to the second page. The screen D81 includes the filename display D53, a button D85, the page display D61, the button D65, the number-of-copies input field D67, buttons D69 and D71, and an arrow D89. Among these, the filename display D53, the button D65, the number-of-copies input field D67, and the buttons D69 and D71 are the same as those of the screen D51 described above, and thus description thereof will be omitted.

In the print setting screen D81 of FIG. 11A, the button D85 is arranged at a position corresponding to the button D55 in the print setting screen D51, while no button is arranged at the positions corresponding to the buttons D57 and D59 in the screen D51. This is because the USB direct print processing exemplified in the first embodiment makes it possible to set four types of print settings (duplex printing, sheet selection, printing in black and white, and sort/group). In the screen D81 as well, five types of print settings may be set by arranging the button D57 as in the screen D51, and six types of print settings may be set by further arranging a button at a position corresponding to the button D59. In order to enable seven or more types of print settings, the print setting screens of the third page and subsequent pages are required to be displayed in addition to the print setting screens D51 and D81.

The button D85 is a UI component and corresponds to the setting item "sort/group". The size and shape of the button D85 displayed on the screen are the same as those of the buttons D55, D57, and D59. The setting item "sort/group" is a button for setting a method of outputting printed matter based on a document of a plurality of pages. When "sort" is set, the controller 100 sorts and outputs sheets in the order of page numbers of the document one by one by using the image former 170. When "group" is set, the controller 100 outputs the designated number of copies in a batch for each page by using the image former 170. In the example of FIG. 11A, "SORT" is displayed below the button D85, which indicates that the printed sheets are sorted and output. When the button D85 is operated via the operation inputter 130, the screen displayed on the display 120 transitions from the screen D51 to a screen D161 to be described below.

The page display D61 is the same as the page display D61 of the screen D51. Note that, however, since the screen D81 is the second page of the print setting screen of the USB direct print processing, the left circle corresponding to the first page is a white circle, and the right circle corresponding to the second page is a black circle.

The arrow D89 is a button for moving between the pages of the print setting screen of the USB direct print processing, similar to the arrow D63. The arrow D63 is a UI component for moving to the next page, whereas the arrow D89 is a UI component for moving to the previous page. When the arrow D89 is operated via the operation inputter 130, the screen displayed on the display 120 transitions from the screen D81 to the screen D51. Since the print setting screen of the USB direct print processing is composed of two pages and the screen D81 is the second page of the two pages, the arrow D63 for moving to the next page is not displayed in the screen D81.

The screen D101 of FIG. 11B is an example of a duplex print setting screen. The screen D101 includes buttons D103, D105, D107, and D109.

The buttons D103, D105, and D107 are each a button to be set to either an on state or an off state. Only one of the buttons D103, D105, and D107 is set to the on state. When any of the buttons D103, D105, and D107 is set to ON, the other two buttons are set to OFF. In FIG. 11B, only the button D103 is hatched, which indicates that only the button D103 is set to the on state.

The button D103 is a button for setting single-sided printing. The setting of single-sided printing is switched between ON and OFF in response to the operation with respect to the button D103 via the operation inputter 130. When the button D103 is set to ON via the operation inputter 130, the buttons D105 and D107 are set to OFF, so that single-sided printing is set.

The button D105 is a button for setting duplex short-edge binding. The setting of duplex short-edge binding is a setting for performing duplex printing on the premise of short-edge binding, and is a setting for performing duplex printing so that the top and bottom of the image on the front surface coincide with the top and bottom of the image on the back surface of the printed matter.

The button D107 is a button for setting duplex long-edge binding. The setting of duplex long-edge binding is a setting for performing duplex printing on the premise of long-edge binding, and is a setting for performing duplex printing so that the top and bottom of the image on the front surface are opposite to the top and bottom of the image on the back surface of the printed matter.

The button D109 is an OK button. When the button D109 is operated via the operation inputter 130, the controller 100 updates the setting value of the USB direct print setting storage area 110-1 in accordance with the setting of duplex printing/single-sided printing corresponding to the button that is in the on state at that time among the buttons D103, D105, and D107. For example, in the example of FIG. 11B, since the button D103 is in the on state, when the button D109 is operated in this situation, the controller 100 updates the setting value of the USB direct print setting storage area 110-1 to set the single-sided printing. Then, the screen D51, where the above setting value is reflected to the button D55, is displayed on the display 120.

The screen D121 of FIG. 11C is an example of a number-of-copies setting screen. The screen D121 includes a number-of-copies input field D123, a numeric keypad D125, and a button D127. The number-of-copies input field D123 is a field for inputting the number of copies to be printed. The numeric keypad D125 is a numeric keypad for inputting a numerical value to the number-of-copies input field D123. The button D127 is an OK button. When the button D127 is operated via the operation inputter 130, the controller 100 causes the screen displayed on the display 120 to transition from the screen D121 to the screen D51, and displays the numerical value input to the number-of-copies input field D123 at that time point in the number-of-copies input field D67.

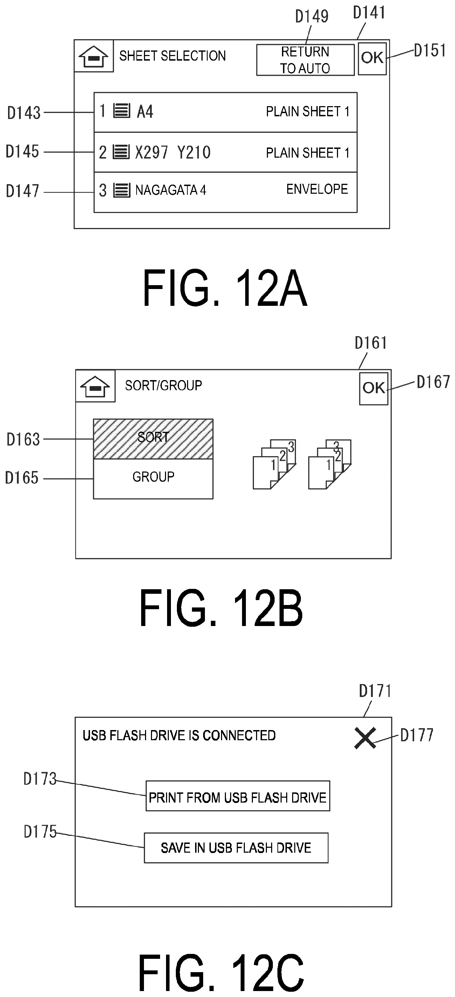

FIG. 12 is examples of a screen displayed on the display 120 of the MFP 10 according to the first embodiment of the disclosure. The screen D141 of FIG. 12A is an example of a sheet selection screen. The screen D141 includes buttons D143, D145, D147, D149, and D151 as UI components.

The buttons D143, D145, and D147 each correspond to one feed tray. On each of the buttons D143, D145, and D147, the size and type of a sheet that is set in the corresponding feed tray are displayed. On the button D143, "A4" and "PLAIN SHEET 1" are displayed. On the button D145, "X297 Y210" and "PLAIN SHEET 1" are displayed. On the button D147, "NAGAGATA 4" and "ENVELOPE" are displayed.

On the button D149, "RETURN TO AUTO" is displayed. The button D149 is a button that is displayed as being operable (active display) when an automatic sheet selection function for automatically selecting a sheet/feed tray is set to be enabled in accordance with print data. When the button D149 is turned on (enabled), the controller 100 automatically selects a sheet/feed tray in accordance with print data when executing printing.

When the automatic sheet selection function is not set to be enabled, the button D149 is displayed as being inoperable (inactive display or non-display). In this case, only one of the buttons D143, D145, and D147 is set to the on state. When a button in the off (disabled) state is operated via the operation inputter 130, the button transitions to the on state, and a button that has been in the on state immediately before the above transition transitions to the off state.

The controller 100 may control the display state of the button D149 as follows. For example, immediately after the button D57 displayed as "AUTOMATIC" is operated in the screen D51 and the screen transitions to the screen D141, the controller 100 may display the button D149 as being inoperable (inactive display or non-display). Further, the controller 100 may display the button D149 as being operable (active display) after receiving an operation of selecting any one of the buttons D143, D145, and D147 in the screen D141, in which the button D149 is displayed as being inoperable (inactive display or non-display).

The button D151 is an OK button; when the button D151 is operated via the operation inputter 130, the controller 100 updates the setting value of the USB direct print setting storage area 110-1 in accordance with the sheet setting corresponding to the button in the on state at the time point of the operation of the button D151 among the buttons D143, D145, D147 and D149, and displays the screen D51, in which the above setting value is reflected to the button D57, on the display 120.

The screen D161 of FIG. 12B is an example of a sort/group setting screen. The screen D161 includes buttons D163, D165, and D167. On the button D163, "SORT" is displayed, and on the button D165, "GROUP" is displayed. Only one of the buttons D163 and D165 is displayed in the on state.

When the button D163 is set to the on state and the button D165 is set to the off state, the controller 100 performs sort output. That is, the controller 100 sorts and outputs a document related to the print data in the order of page numbers one by one by using the image former 170.

Conversely, when the button D163 is set to the off state and the button D165 is set to the on state, the controller 100 performs group output. That is, the controller 100 outputs the document related to the print data in a batch for each page by using the image former 170.

The button D167 is an OK button; when the button D167 is operated via the operation inputter 130, the controller 100 updates the setting value of the USB direct print setting storage area 110-1 in accordance with the setting corresponding to the button in the on state at the time point of the operation of the button D167 between the buttons D163 and D165, and displays the screen D81, in which the above setting value is reflected to the button D85, on the display 120.

A screen D171 of FIG. 12C is an example of a USB flash drive connection screen. When the controller 100 detects the connection of the USB flash drive 20 to the connector 150, the screen D171 is displayed on the display 120 in response to the detection. The screen D171 includes buttons D173, D175, and D177.

On the button D173, "PRINT FROM USB FLASH DRIVE" is displayed. When the button D173 is operated via the operation inputter 130, the controller 100 starts the USB direct print processing.

On the button D175, "SAVE IN USB FLASH DRIVE" is displayed. The button D175 is a button equivalent to the button D7; when the button D175 is operated via the operation inputter 130, the controller 100 starts processing for saving the image having been input (scanned) from the image inputter 160 in the USB flash drive 20 connected to the connector 150. A scan setting screen may be displayed in response to the operation with respect to the button D175, as in the case of the button D7.

The button D175 may correspond to a function other than the function of a button for instructing to save the scanned image in the USB flash drive 20. For example, in response to the operation with respect to the button D175, the controller 100 may display a list (not illustrated) of files stored in the storage 110, receive input for designating a file to be saved in the USB flash drive via the operation inputter 130, and save the designated file in the USB flash drive.

1.9 Screen Example of Hold Print Processing in First Embodiment

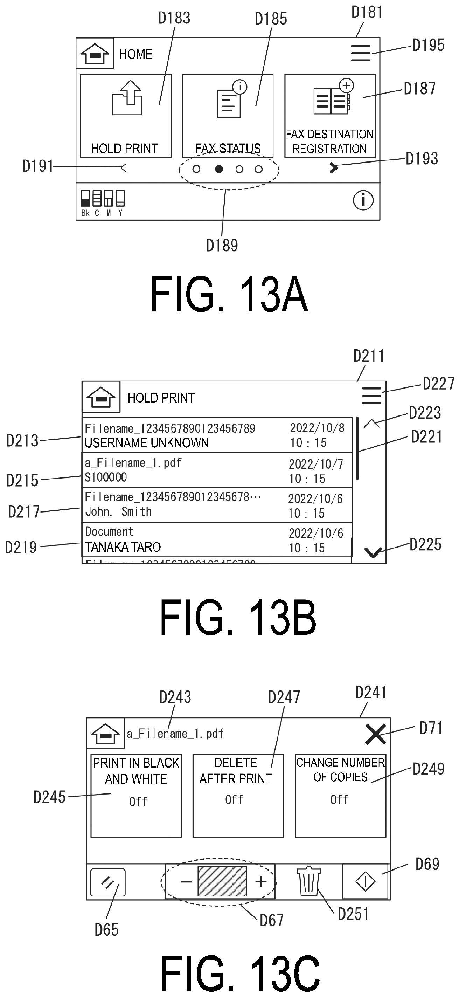

FIG. 13 is examples of a screen displayed on the display 120 of the MFP 10 according to the first embodiment of the disclosure. The screen D181 of FIG. 13A is an example of a home screen. The screen D181 is a screen that is displayed when the arrow D11 is operated on the screen D1.

The screen D181 displays, as UI components, buttons D183, D185 and D187, a page display D189, arrows D191 and D193, and a menu button D195.

The button D183 is a button corresponding to hold print; when the button D183 is operated via the operation inputter 130, the controller 100 starts the hold print processing in FIG. 9 and causes the screen displayed on the display 120 to transition from the screen D181 to a screen D211 to be described below. On the button D183, "HOLD PRINT" is described.

The button D185 is a button for checking a fax status. When the button D185 is operated via the operation inputter 130, the controller 100 displays a fax status screen (not illustrated) on the display 120. The fax status screen displays information such as the name of a fax destination/transmission source, title, telephone number, time regarding the transmission or reception, number of pages transmitted or received, and result (stop, busy, reception OK, transmission OK, or the like). On the button D185, "FAX STATUS" is described.

The button D187 is a button for registering a fax number, name/title, and the like as a destination of the fax. When the button D187 is operated via the operation inputter 130, the controller 100 displays a fax destination registration screen (not illustrated) on the display 120. The fax destination registration screen includes, for example, input fields for inputting a fax number, name/title, reading aid for the name/title, and destination type (fax, Internet fax, or the like) of the destination to be registered, and receives input via the operation inputter 130. On the button D187, "FAX DESTINATION REGISTRATION" is described.

The page display D189 indicates the number of pages constituting the screen D181 and the page number of the screen that is currently displayed. Three white circles and one black circle surrounded by a broken line in FIG. 13A indicate that the screen D181 is composed of four pages (3 + 1). Of the three white circles and one black circle, the black circle arranged at the second position from the left indicates the page currently displayed, and in FIG. 13A, it is indicated that the screen D181 is the second page.

The arrows D191 and D193 are UI components for moving a page to be displayed on the screen D181. When the leftward arrow D191 is operated via the operation inputter 130, a page prior to the currently displayed page is displayed. In the previous page, the black circle in the page display D189 is arranged at a position shifted to the left by one (the first from the left). When the rightward arrow D193 is operated via the operation inputter 130, a page (screen D1) subsequent to the currently displayed page is displayed. In the subsequent page, the black circle in the page display D189 is arranged at a position shifted to the right by one (the third from the left).

The menu button D195 is the same as the menu button D15 of the screen D1 in FIG. 10A.

The screen D211 of FIG. 13B is an example of a file selection screen in the hold print processing. The screen D211 includes, as UI components, filename displays D213, D215, D217, and D219, a scroll bar D221, arrows D223 and D225, and a menu button D227.

The filename displays D213, D215, D217, and D219 respectively display filenames, user names, and dates and times when the files were stored. For example, "Filename_1234567890123456789", "a_Filename_1.pdf", "Filename_123456789012345678...", and "Document" are displayed in the filename displays D213, D215, D217, and D219, respectively. The filename displays D213, D215, D217, and D219 are part of a list of filenames that can be displayed on the screen D211, and although not illustrated in FIG. 13B, the filenames are also listed in sequence below the filename display D219. When any of the filename displays D213, D215, D217, and D219 (the filename display D215 in the present embodiment) is selected via the operation inputter 130, the controller 100 causes the screen displayed on the display 120 to transition from the screen D211 to the screen D241 to be described below.

The scroll bar D221 and the arrows D223 and D225 are UI components for vertically scrolling the filenames displayed on the screen D211. In the state depicted in FIG. 13B, the scroll bar D221 is located at the upper end of the movable range; in this case, the files being displayed are four files from the top of the list of files. By operating the arrow D225, the filenames present at the lower side of the file list are displayed. When the lower side of the file list is displayed, by operating the arrow D223, the filenames present at the upper side of the file list are displayed.

The menu button D227 is a UI component for displaying a menu screen, and corresponds to the menu button D37 in the screen D21 of FIG. 10B. When the menu button D227 is operated via the operation inputter 130, the controller 100 displays a menu screen for setting one or more items on the display 120. The menu screen displays a list of setting items related to file selection. The menu screen preferably includes a button for transition to the screen D211.

Although the description has been made assuming that, for example, the sort item setting for sorting the filenames in ascending or descending order is displayed on the menu screen displayed in response to the operation with respect to the menu button D37, the menu screen displayed in response to the operation with respect to the menu button D227 may include, in addition to the same sort item setting, a sort setting item based on the date when the data was held (stored) and a sort setting item based on the name of the user who held (stored) the data.

The menu screen displayed in response to the operation with respect to the menu button D227 may display a button for instructing to delete all the data stored for the hold print. In response to the operation with respect to this button, the controller 100 collectively deletes the hold print data stored in the hold print data storage area 110-5. Before executing the deletion, it is preferable that the controller 100 display a deletion confirmation screen (not illustrated) including a confirmation request message of, for example, "Do you want to delete all the hold print data?", a deletion button, and a cancel button. In response to the operation with respect to the deletion button, the controller 100 executes collective deletion of all the hold data from the hold print data storage area 110-5. In response to the operation with respect to the cancel button, the controller 100 causes the screen of the display 120 to transition from the deletion confirmation screen to a menu screen displayed in response to the operation with respect to the menu button D227.

The screen D241 of FIG. 13C is an example of a print setting screen in the hold print processing. The screen D241 is a setting screen corresponding to one (hold print function/processing) of the plurality of print functions (USB direct print function/processing, hold print function/processing). The screen D241 is also referred to as a first setting screen related to printing of a file including information regarding the sorting of the printed matter. The screen D241 does not include a UI component (e.g., the sort/group setting button D85) for setting a sorting method of the printed matter. The print setting screen of the hold print processing is composed of one page. The screen D241 includes a filename display D243, buttons D245 and D247, the buttons D249 and D65, the number-of-copies input field D67, the buttons D69 and D71, and a trash box button D251. The print setting screen D241 of the hold print processing and the print setting screen D51 of the USB direct print processing are both the screens that are displayed on the same display 120, and have the same shape and size.

In the hold print processing, for example, printing is executed in accordance with the settings when a print job is held in the MFP. That is, the sort/group setting having been set when the MFP was instructed to perform hold print via the printer driver of the client terminal (or a default sort/group setting), is taken over. Accordingly, the print setting screen D241 does not include a UI component for setting a sorting method of the printed matter (for example, the button D85 corresponding to the sort/group setting in the print setting screen D81 of the USB direct print processing). The print setting screen D241 is a setting screen for printing a file including information about the sorting of the printed matter (hold print processing), and is also referred to as the first setting screen in a point that it does not include a UI component for setting a method of sorting the printed matter.

The filename display D243 is a field for displaying the filename of the file that is currently an operation target. In FIG. 13C, "a_Filename_1.pdf' is displayed as the filename. The filename display D243 is displayed at the same position as the filename display D53 in the print setting screen D51 of the USB direct print processing.

The buttons D245, D247, and D249 are UI components, each of which corresponds to one setting item. The buttons D245, D247, and D249 have the same shape (square in this case) and the same size on the screen D241. The shapes and sizes of the buttons D245, D247, and D249 are the same as the shapes and sizes of the buttons D55, D57, and D59 of the screen D51, which is the print setting screen of the USB direct print processing. The buttons D245, D247, and D249 are arranged in order at positions corresponding to the buttons D55, D57, and D59 on the print setting screen D51 of the USB direct print processing.

The button D245 is a button for turning on and off the function of "print in black and white". The function of "print in black and white" is a function of monochrome (black and white) printing naturally used when the print data is monochrome, but also used even when the print data is in color. On the button D245, "PRINT IN BLACK AND WHITE" is displayed as letters indicating the function. In addition, either "ON" or "OFF" is displayed on the button D245 in accordance with the current setting state of the function of "print in black and white". In FIG. 13C, "OFF" is displayed.

The function associated with the button D245 is the same as the function associated with the button D59 in the print setting screen D51 of the USB direct print processing. Because of this, the same icon image may be used for the button D59 and the button D245. By using the same icon image, the user can be notified that the setting contents are of the same type although there is a difference between the USB direct print processing and the hold print processing.

The button D247 is a button for turning on and off the function of "delete after print". The function of "delete after print" is a function of deleting a file after the file is printed. On the button D247, "DELETE AFTER PRINT" is displayed as letters indicating the function. In addition, either "ON" or "OFF" is displayed on the button D247 in accordance with the setting state of the function of "delete after print". In FIG. 13C, "OFF" is displayed.

The button D249 is a button for enabling/disabling (turning on/off) the function of "change number of copies", that is, the function for setting the number of copies to be printed. The button D249 is also referred to as the first UI component. On the button D249, "CHANGE NUMBER OF COPIES" is displayed as letters indicating the function. In addition, either "ON" or "OFF" is displayed on the button D249 in accordance with the setting state of the function of "change number of copies". In FIG. 13C, "OFF" is displayed. In general, in the hold print processing, since printing is performed in accordance with the number of copies or the like designated by the user using the client terminal, it is unnecessary to designate the number of copies when printing is performed in the hold print processing, and thus the initial value is set to "OFF"; however, a user who desires to change the number of copies can change the number of copies to be printed by operating the button D249 via the operation inputter 130 to turn on the function of "change number of copies".

The controller 100 switches the state of the number-of-copies input field D67 between an active state and an inactive state in response to ON/OFF of the button D249. The active state is a state (operable state) in which an operation via the operation inputter 130 is accepted, and the inactive state is a state (inoperable state) in which an operation via the operation inputter 130 is not accepted. In the inactive state, the display of the number-of-copies input field D67 may be grayed out to clearly notify the user of the inactive state. At this time, the numerical value input field of the number-of-copies input field D67 may be displayed in blank (no numerical value is displayed). In this case, the controller 100 performs printing in accordance with the number of copies set by the printer driver in the client terminal 30. In the active state, the controller 100 displays the number of copies (for example, "1") in the numerical value input field, and the number of copies can be changed.

When the button D249 is set to OFF on the screen D241, the number-of-copies input field D67 is in the inactive state. The number-of-copies input field D67 is displayed in the inactive state until the button D249 is turned on via the operation inputter 130 and the function of setting the number of copies to be printed is enabled. This makes it possible to prevent the occurrence of an operation error when the number of copies to be printed is set again (changed).

The trash box button D251 is a button for deleting a file. When the trash box button D251 is operated via the operation inputter 130, the controller 100 deletes the file displayed in the filename display D243. The deletion confirmation screen may be displayed on the display 120 in response to the operation with respect to the trash box button D251. The deletion confirmation screen includes, for example, a message for confirming whether or not to actually delete the file (e.g., "Do you want to delete the file?"), the filename of the file to be deleted (displayed in the filename display D243), the cancel button, and the deletion button. When the deletion button is operated on the deletion confirmation screen, the controller 100 deletes the file whose filename is displayed on the deletion confirmation screen from the hold print data storage area 110-5. When the cancel button is operated on the deletion confirmation screen, the controller 100 returns to the screen D241 without deleting the file.

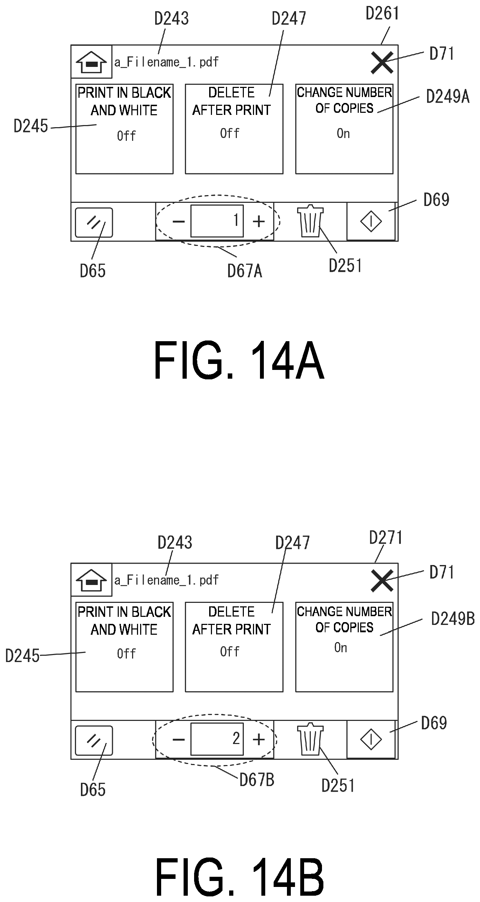

Differing from the number-of-copies input field D67 of the screen D51 and the screen D81, the number-of-copies input field D67 of the screen D241 is displayed (being grayed out) in a state in which a numerical value input via the operation inputter 130 is not accepted at the beginning when the screen D241 is displayed. This is because the number of copies to be printed is basically designated by the client terminal 30 in the hold print processing. In this respect, since the file to be printed does not have a setting value of the number of copies to be printed, the printing is different from the printing of the USB direct print processing in which the setting of the number of copies to be printed may be changed. Note that, however, the user may change the number-of-copies input field D67 to a state in which a numerical value input can be received by operating the number-of-copies input field D67 (for example, clicking the number-of-copies input field D67) via the operation inputter 130, as necessary. The screen after the change is a screen D261 of FIG. 14A.

FIG. 14 is other examples of a print setting screen in the hold print processing that is displayed on the display 120 of the MFP 10 according to the first embodiment of the disclosure. The screen D261 of FIG. 14A is a screen at a time immediately after the button D249 is operated on the screen D241 via the operation inputter 130 and the setting state is changed from OFF to ON. A screen D271 is a screen displayed after the user operates a plus button of a number-of-copies input field D67A once via the operation inputter 130 on the screen D261.

On the screen D241, "OFF" is displayed on the button D249, but on the screen D261, "ON" is displayed on a button D249A corresponding to the button D249 in response to the change of the setting state.

On the screen D241, the display of the number-of-copies input field D67 is grayed out, and the numerical value input field is displayed in blank. In contrast, on the screen D261, the number-of-copies input field D67A corresponding to the number-of-copies input field D67 is displayed in a normal state (active state without grayed-out display). In addition, on the screen D261, the numerical value "1" is displayed in the numerical value input field of the number-of-copies input field D67A, while the numerical value "2" is displayed in the numerical value input field of the number-of-copies input field D67B on the screen D271 by the above-discussed operation of the plus button once (or by reflecting the setting value of the number of copies to be printed included in the file that is displayed in the filename display D243).

### 1.10 Screen Transition of USB Direct Print Processing in First Embodiment

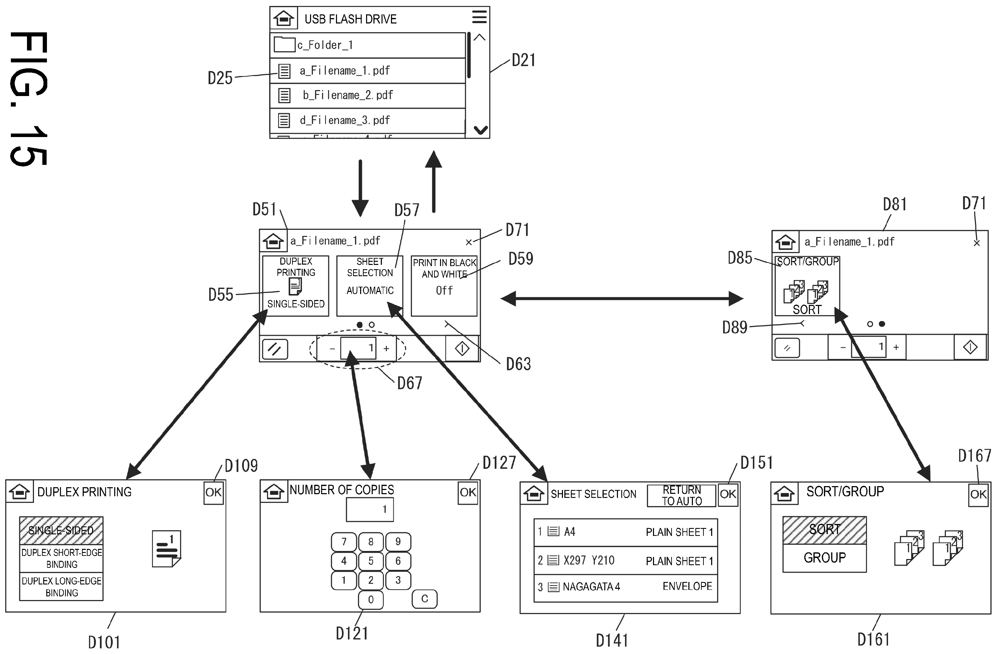

FIG. 15 is a diagram for describing screen transition that is displayed on the display 120 of the MFP 10 according to the first embodiment of the disclosure, where the print setting screens D51 and D81 in the USB direct print processing are set in the center.

When a user performs an operation of selecting, for example, the filename display D25 via the operation inputter 130 while the file selection screen D21 is displayed on the display 120, the controller 100 causes the screen displayed on the display 120 to transition to the print setting screen D51. When the user operates the button D71 via the operation inputter 130 while the print setting screen D51 is displayed on the display 120, the controller 100 causes the screen displayed on the display 120 to transition to the file selection screen D21.

When the user operates the arrow D63 via the operation inputter 130 while the print setting screen D51 is displayed on the display 120, the controller 100 causes the screen displayed on the display 120 to transition to the print setting screen D81. The print setting screens D51 and D81 are the first and second pages of the print setting screen, respectively. When the user operates the arrow D89 via the operation inputter 130 while the print setting screen D81 is displayed on the display 120, the controller 100 causes the screen displayed on the display 120 to transition to the print setting screen D51.

When the user operates the button D55 via the operation inputter 130 while the print setting screen D51 is displayed on the display 120, the controller 100 causes the screen displayed on the display 120 to transition to the duplex print setting screen D101. Similarly, when the user operates the number-of-copies input field D67 and the button D57 via the operation inputter 130, the controller 100 causes the screen displayed on the display 120 to transition to the number-of-copies setting screen D121 and the sheet selection screen D141, respectively.

When the user operates the button D109 via the operation inputter 130 while the duplex print setting screen D101 is displayed on the display 120, the controller 100 causes the screen displayed on the display 120 to transition to the print setting screen D51. Similarly, when the user operates the button D127 or D151 via the operation inputter 130 while the number-of-copies setting screen D121 or the sheet selection screen D141 is displayed on the display 120, the controller 100 causes the screen displayed on the display 120 to transition to the print setting screen D51.

When the user operates the button D85 via the operation inputter 130 while the print setting screen D81 is displayed on the display 120, the controller 100 causes the screen displayed on the display 120 to transition to the sort/group setting screen D161.

When the user operates the button D167 via the operation inputter 130 while the sort/group setting screen D161 is displayed on the display 120, the controller 100 causes the screen displayed on the display 120 to transition to the print setting screen D81. When the user operates the button D71 via the operation inputter 130 while the print setting screen D81 is displayed on the display 120, the controller 100 causes the screen displayed on the display 120 to transition to the file selection screen D21.

### 1.11 Screen Transition of Hold Print Processing in First Embodiment

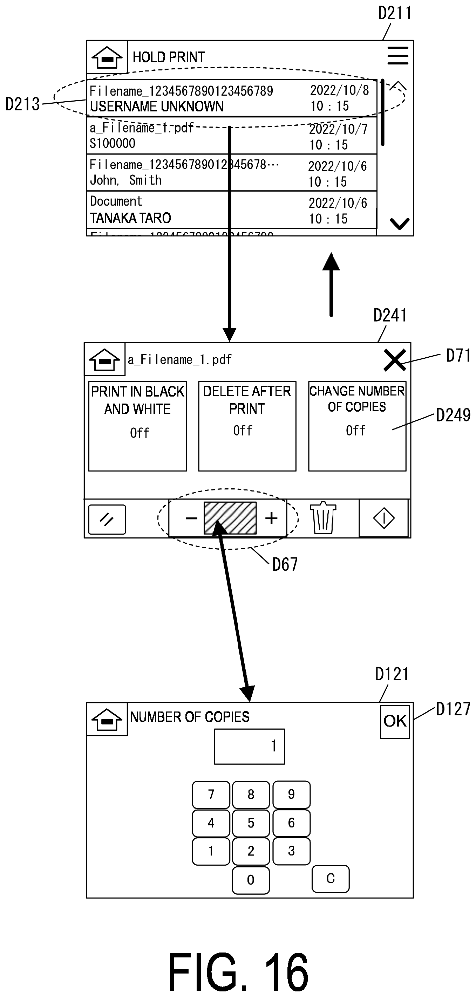

FIG. 16 is a diagram for describing screen transition that is displayed on the display 120 of the MFP 10 according to the first embodiment of the disclosure, where the print setting screen D241 in the hold print processing is set in the center.

When a user performs an operation of selecting, for example, the filename display D213 via the operation inputter 130 while the file selection screen D211 is displayed on the display 120, the controller 100 causes the screen displayed on the display 120 to transition to the print setting screen D241. When the user operates the button D71 via the operation inputter 130 while the print setting screen D241 is displayed on the display 120, the controller 100 causes the screen displayed on the display 120 to transition to the file selection screen D211.

In a case where the print setting screen D241, in which "change number of copies" of the button D249 is in the on state and the number-of-copies input field D67 is in the active state, is displayed on the display 120, when the user operates the numerical value input field of the number-of-copies input field D67 via the operation inputter 130, the controller 100 causes the screen displayed on the display 120 to transition to the number-of-copies setting screen D121. In a case where the button D249 is in the off state and the number-of-copies input field D67 is in the inactive state, when the numerical value input field of the number-of-copies input field D67 is operated via the operation inputter 130, the controller 100 does not accept the operation. At this time, the controller 100 may output a notification telling that the operation cannot be accepted (e.g., by sounding a warning beep).

### 1.12 Operation Example of USB Direct Print Processing in First Embodiment

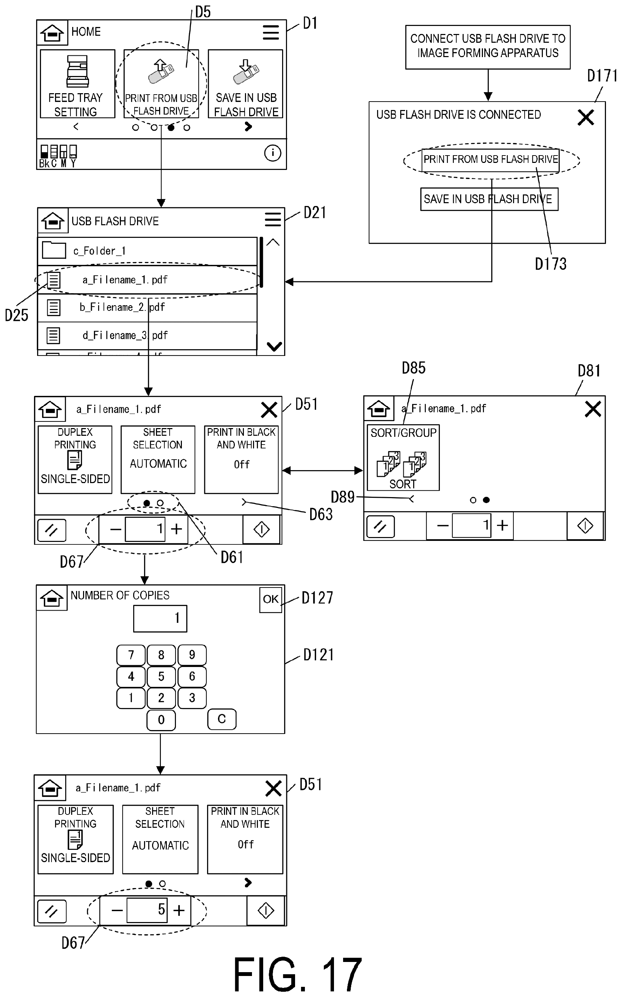

FIG. 17 is a diagram for describing an example of screen transition that the MFP 10 according to the first embodiment of the disclosure displays on the display 120 in the USB direct print processing.

When the user operates the button D5 via the operation inputter 130 in the state in which the USB flash drive 20 is connected to the connector 150 while the home screen D1 (the third page of the home screen) is displayed on the display 120, the controller 100 causes the screen of the display 120 to transition to the file selection screen D21. Alternatively, when it is detected that the USB flash drive 20 is connected to the connector 150, the controller 100 displays the screen D171. When the button D173 is operated while the screen D171 is displayed, the controller 100 causes the screen displayed on the display 120 to transition from the screen D171 to the file selection screen D21.

When the user operates the filename display D25 via the operation inputter 130 on the file selection screen D21, the controller 100 causes the screen displayed on the display 120 to transition from the file selection screen D21 to the print setting screen D51. The print setting screen D51 is the first page of the print setting screen, and transitions to the print setting screen D81, which is the second page of the print setting screen, in response to the operation with respect to the arrow D63. On the print setting screen D81, the screen transitions to the print setting screen D51 in response to the operation with respect to the arrow D89. Initially, the default value "1" is displayed in the numerical value input field of the number-of-copies input field D67 of each of the print setting screens D51 and D81. In a case where a setting item for setting an initial value of the number of copies to be printed of the USB direct print is provided in the menu screen or the like that is displayed in response to the operation with respect to the menu button D15 on the screen D1, and the initial value is set therein, the set initial value is displayed in the numerical value input field of the number-of-copies input field D67.

In the USB direct print processing, when a plurality of the numbers of copies to be printed are set, it is preferable to set how to sort and output a plurality of printed sheets. Thus, the print setting screen D81 includes the button D85.

In the USB direct print processing, a file stored in the USB flash drive 20 is printed; however, since a print data file usually does not include a setting of the number of copies to be printed, it is necessary to set the number of copies in the USB direct print processing. Therefore, on the screens D51 and D81, which are the print setting screens of the USB direct print processing, the number-of-copies input field D67 is displayed in the active state to receive the setting of the number of copies.

The USB direct print processing is different from the hold print processing in which the number of copies is not necessarily changed, in a point that the number of copies is always set. Accordingly, a button equivalent to the button D249 for changing the number of copies displayed on the print setting screen D241 of the hold print processing is provided in none of the screens D51 and D81, which are the setting menus of the USB direct print processing.

When the user operates the numerical value input field of the number-of-copies input field D67 via the operation inputter 130 on the print setting screen D51, the controller 100 causes the screen to transition from the print setting screen D51 to the number-of-copies setting screen D121.

When the user inputs a desired number of copies (in this case, "5") on the number-of-copies setting screen D121 via the operation inputter 130, and operates the OK button D127, the controller 100 causes the screen to transition from the number-of-copies setting screen D121 to the print setting screen D51. At this time, the input on the number-of-copies setting screen D121 is reflected, so that "5" is displayed in the numerical value input field of the number-of-copies input field D67.

### 1.13 Operation Example of Hold Print Processing in First Embodiment

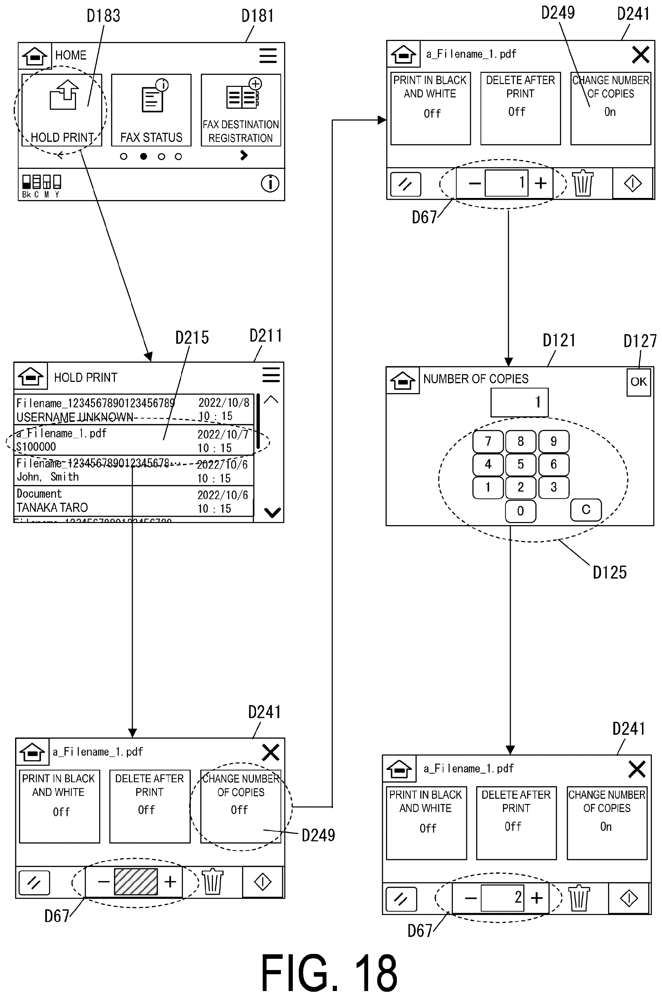

FIG. 18 is a diagram for describing an example of screen transition that the MFP 10 according to the first embodiment of the disclosure displays on the display 120 in the hold print processing.

When the user operates the button D183 via the operation inputter 130 while the home screen D181 (the second page of the home screen) is displayed on the display 120, the controller 100 causes the screen of the display 120 to transition to the file selection screen D211.

When the user selects the filename display D215 via the operation inputter 130 on the file selection screen D211, the controller 100 causes the screen displayed on the display 120 to transition from the file selection screen D211 to the print setting screen D241. At the time point immediately after the screen transition, the numerical value input field of the number-of-copies input field D67 is in the inactive state (the state in which an operation is not accepted) and is grayed out.

When the user operates the button D249 on the print setting screen D241 via the operation inputter 130, the display of "OFF" of the button D249 is changed to the display of "ON", and the number-of-copies input field D67 is shifted to the active state. When the user further operates the numerical value input field of the number-of-copies input field D67 via the operation inputter 130, the controller 100 displays the screen D121 on the display 120. At this time, the numerical value indicating the number of copies displayed in the numerical value input field of the number-of-copies input field D67 is, for example, a value that is set in the client terminal 30 or a predetermined fixed value (e.g., 1).

When the user inputs a desired number of copies (here, inputs "2") using the numeric keypad D125 and then operates the OK button D127, the controller 100 displays the screen D241 on the display 120. At this time, the input using the numeric keypad D125 is reflected, so that "2" is displayed in the numerical value input field of the number-of-copies input field D67.

In the hold print processing, since the number of copies is set in the client terminal 30, it is basically unnecessary to set the number of copies to be printed. Due to this, the print setting screen D241 of the hold print processing is initially displayed in a state where the number-of-copies input field D67 is inactive. However, in consideration of a case where the number of copies to be printed needs to be changed after the number of copies is set in the client terminal 30, the button D249 for changing the number of copies is provided in the print setting screen D241 of the hold print processing. In the hold print processing, when the user wants to change the number of copies to be printed, the user can operate the button D249 to turn on "change number of copies" and set the desired number of copies in the number-of-copies input field D67.

### 1.14 Summary

In the first embodiment, a file is selected on the file selection screen D21 in the case of the USB direct print processing while a file is selected on the file selection screen D211 in the case of the hold print processing, and then the selected file is printed. Prior to printing, the print setting screens are displayed in both the USB direct print processing and the hold print processing (the print setting screens D51 and D81 of the USB direct print processing and the print setting screen D241 of the hold print processing). As can be understood from a comparison between the print setting screens D51 and D81 of FIGS. 10C, 11A and the print setting screen D241 of FIG. 13C, the print setting screens D51 and D81 and the print setting screen D241 have the following common points and different points.

### Screen Configuration

The print setting screens D51, D81, and D241 have the same shape and size, and are each configured by the common UI component arranged at the same position in the screen. In the print setting screens D51, D81, and D241, the UI components arranged at the same position on the screen include elements having the same assigned functions (e.g., the reset button D65 and the print button D69), and elements having different assigned functions (e.g., the buttons D55, D57, and D59 of the print setting screen D51, and the buttons D245, D247 and D249 of the print setting screen D241).

The filename of the file being selected is displayed at the top of the screen in each of the print setting screens D51, D81, and D241 (the filename displays D53 and D243). In each of the print setting screens D51, D81, and D241, a maximum of three buttons having the same shape and size and having different associated setting contents are arranged side by side in the middle of the screen (the buttons D55, D57, D59, D85, D245, D247, and D249). The print setting screens D51, D81, and D241 include buttons having the same shape and size and assigned to the same functions at the bottom of the screen (the reset button D65, the number-of-copies input field D67, and the print button D69).

As described above, the screen configurations of the print setting screens of the USB direct print processing and the hold print processing, which look alike but are different from each other, are made to be common, thereby making it possible to improve the operability for the user.

In addition, in the print setting screens of the USB direct print processing and the hold print processing, while the screen configurations are made to be common as described above, the UI component specific to each processing is arranged in the print setting screen, thereby making it possible to improve the user's recognition and suppress the occurrence of an operation error.

In the USB direct print processing, basically, the setting of the number of copies to be printed is not included in the file to be printed, and therefore it is highly necessary that the number of copies to be printed can be always set (changed). Because of this, the button D249 of "change number of copies", which is displayed on the print setting screen D241 of the hold print processing, is not displayed on any of the print setting screens D51 and D81 of the USB direct print processing. In this manner, in the USB direct print processing, the UI component related to the unnecessary operation is not displayed, thereby making it possible to improve the user's recognition and to suppress the occurrence of an operation error.

In the hold print processing, basically, the setting of the number of copies to be printed is included in the file to be printed, and therefore the necessity of making it possible to always set (change) the number of copies to be printed is low. Due to this, in the print setting screen D241 of the hold print processing, the button D249 of "change number of copies" is in the off state, and the number-of-copies input field D67 is displayed in the inactive state. To change the number of copies to be printed, the user needs to operate the button D249 of "change number of copies" to set the button to the on state, and change the number-of-copies input field D67 to the active state. In this way, prior to the operation of changing the number of copies, by requesting the user to operate the button D249 of "change number of copies", in other words, requesting the user to perform a two-step operation, it is possible to prevent the user from erroneously changing the setting of the number of copies.

### Setting of Number of Copies to be Printed

Since the number of copies to be printed needs to be set in the USB direct print processing, the number-of-copies input field D67 is always displayed in the active state on the print setting screens D51 and D81. The print setting screens D51 and D81 do not display a button or the like for switching the active state/inactive state of the number-of-copies input field D67.

In contrast, in the hold print processing, since the number of copies to be printed is set in the client terminal 30, it is basically unnecessary to set the number of copies to be printed in the MFP 10. Due to this, the number-of-copies input field D67 is displayed in the inactive state on the print setting screen D241. The print setting screen D241 of the hold print processing includes the button D249 for switching the active state/inactive state of the number-of-copies input field D67. By providing the button D249, the number of copies to be printed can be changed, as necessary. The number-of-copies input field D67 is an example of a UI component by which the controller 100 controls the display for each print function (the USB direct print processing and the hold print processing).

As described above, while the screen configurations of the print setting screens of the print functions that look alike (the USB direct print function and the hold print function) are made to be common regardless of the print functions, the UI component related to a specific setting (the button D249 of "change number of copies") is not displayed on the print setting screen of the USB direct print function but is displayed on the print setting screen of the hold print function. With the adoption of the common screen configuration, the operability may be improved; in addition, by controlling the display of a specific UI component in accordance with the print function, the user's recognition may be improved and operation errors may be reduced.

In particular, by providing the button D249 of "change number of copies" related to the setting of the number of copies to be printed as a UI component related to the specific setting, in the hold print function in which print data is saved once in a hold queue (the hold print data storage area 110-5) of the MFP 10 and thereafter the printing is performed, the number of copies to be printed having been set by the user when the print data was saved can be made effective.

In general, since the print data file held by the hold print function includes information regarding the number of copies to be printed, the necessity of setting the number of copies to be printed on the print setting screen is low in many cases, but the printing may be performed by changing the number of copies to be printed in an exceptional case. In consideration of this situation, in the hold print function, the button D249 of "change number of copies" is provided and the default thereof is set to the off state, and the print setting screen is displayed in which the UI component for setting the number of copies to be printed (the number-of-copies input field D67) is in the inactive state. This can prevent the setting of the number of copies to be printed of the hold print function, which does not need to be changed in many cases, from being changed by mistake.

### Display of Trash Box Button D251

In the hold print processing, since the print data is stored in the hold print data storage area 110-5, the controller 100 can directly delete the print data stored in the hold print data storage area 110-5. Because of this, the button D247 and the trash box button D251 are displayed as the UI components for deleting the print data on the print setting screen D241 of the hold print processing. The button D247 is a button that can be switched between ON and OFF by the operation via the operation inputter 130, and when the button is ON, the controller 100 deletes the printed file after printing is executed. The trash box button D251 is a deletion button, and when it is operated via the operation inputter 130, the controller 100 deletes the file being selected at that time (the file displayed in the filename display D243).

The deletion confirmation screen may be displayed on the display 120 in response to the operation with respect to the trash box button D251. The deletion confirmation screen includes, for example, a message for confirming whether or not to actually delete the file (e.g., "Do you want to delete the file?"), the filename of the file to be deleted (displayed in the filename display D243), the cancel button, and the deletion button. When the deletion button is operated on the deletion confirmation screen, the controller 100 deletes the file whose filename is displayed on the deletion confirmation screen from the hold print data storage area 110-5. When the cancel button is operated on the deletion confirmation screen, the controller 100 returns to the screen D241 without deleting the file.

In contrast, data to be printed in the USB direct print processing is saved in the USB flash drive 20. Normally, the controller 100 cannot directly delete the data saved in the USB flash drive 20. Due to this, a UI component equivalent to the trash box button D251 is not displayed on any of the print setting screens D51 and D81.

The trash box button D251 is another example of the UI component by which the controller 100 controls the display for each print function. In any of the print setting screens D51 and D81, no other UI component is arranged at a position corresponding to the trash box button D251 of the print setting screen D241. Accordingly, whether or not the trash box button D251 is displayed does not affect the screen configuration common to the print setting screens D51, D81, and D241.

### 2. Second Embodiment

Next, a second embodiment will be described. The hold print processing is different between the first embodiment and the second embodiment. In the hold print processing of the first embodiment, it is assumed that the number of copies of the held job is one, and that the sort/group setting at the time of executing the job before holding is adopted; however, in the hold print processing of the second embodiment, it is assumed that the processing is changed between a case where the number of copies of the held job is one and a case where the number of copies of the held job is two or more. Only portions differing in configuration and processing from the first embodiment will be mainly described.

### 2.1 Operation of USB Direct Print Processing in Second Embodiment

The operation of the USB direct print processing of the second embodiment is the same as the operation of the USB direct print processing of the first embodiment. Refer to "1.6 Operation of USB Direct Print Processing in First Embodiment" described above.

### 2.2 Operation of Hold Print Processing in Second Embodiment

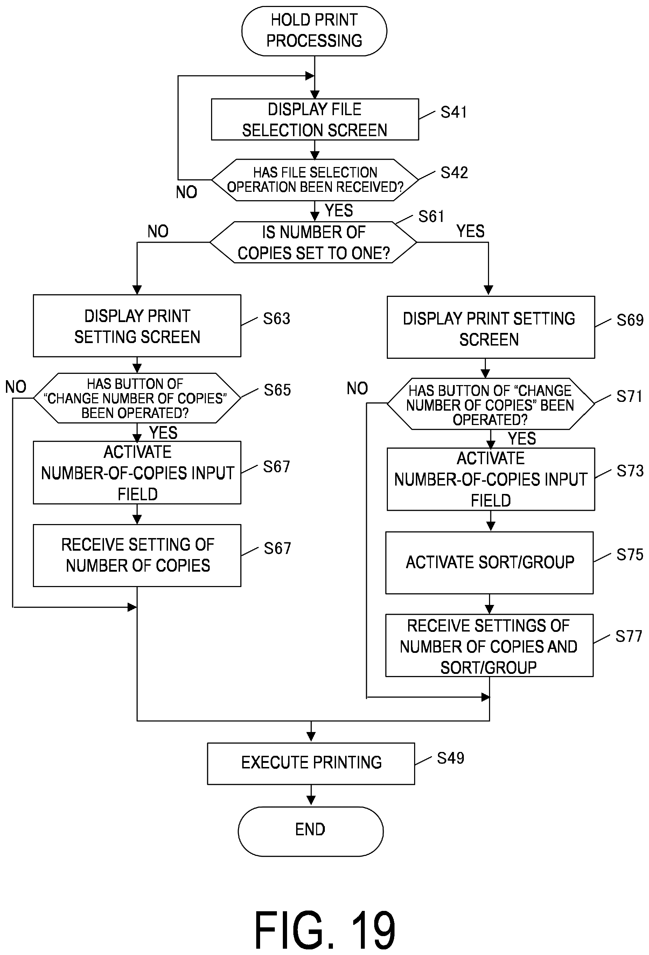

FIG. 19 is a flow chart for describing hold print processing of an MFP according to a second embodiment of the disclosure. In comparison with the hold print processing of the MFP according to the first embodiment illustrated in FIG. 9, the flow is different in that processing in a case where the number of copies set in a file is one and processing in a case where the number of copies set in the file is two or more are provided.

When the hold print processing is started, the controller 100 displays a file selection screen on the display 120 (S41). When an operation of selecting a file to be printed from among the files displayed on the file selection screen has not been received via the operation inputter 130 (S42, NO), the controller 100 continues to display the file selection screen (S41). When the operation of selecting a file to be printed from among the files displayed on the file selection screen is received via the operation inputter 130 (S42, YES), the controller 100 acquires the number of copies to be printed that is set in the selected file, and determines whether the number of copies is one or not one (S61).

When the set number of copies is two or more (S61, NO), the controller 100 displays a print setting screen on the display 120 (S63). The print setting screen includes a button of "change number of copies" for switching ON/OFF of a function of "change number of copies", a number-of-copies input field for inputting the changed number of copies, and a sort/group button for screen transition to a setting screen of a sort/group function (sort/group setting screen) in response to the operation. In the print setting screen displayed in S63, the button of "change number of copies" is in the off state, and "OFF" is displayed thereon. The number-of-copies input field is displayed in a state where no operation is accepted (inactive state). The sort/group button is in the inactive state.

When the button of "change of number of copies" is operated via the operation inputter 130 (S65, YES), the controller 100 switches the button of "change number of copies" to the on state and displays "ON" on the button of "change number of copies". At the same time, the controller 100 switches the state of the number-of-copies input field to a state (active state) in which an operation is received (S67). Thereafter, the controller 100 receives the changed number of copies that is input to the number-of-copies input field via the operation inputter 130 (S67). When an instruction to execute printing is received, the controller 100 prints the file in accordance with the current setting (S49). When the button of "change number of copies" has not been operated via the operation inputter 130 (S65, NO), the controller 100, upon receiving the instruction to execute printing, prints the file selected in S42 as it is (S49).

When the set number of copies is one (S61, YES), the controller 100 displays a print setting screen on the display 120 (S69). As in the print setting screen displayed in S63, the button of "change number of copies" is in the off state, and the number-of-copies input field and the sort/group button are in the inactive state.

When the button of "change number of copies" is operated via the operation inputter 130 (S71, YES), the controller 100 switches the button of "change number of copies" to the on state and displays "ON" on the button of "change number of copies". At the same time, the controller 100 switches the state of the number-of-copies input field to the active state (S73).

Further, the controller 100 switches the sort/group button to the active state (S75). Thereafter, the controller 100 receives the changed number of copies that is input to the number-of-copies input field via the operation inputter 130; further, when the sort/group button is operated, the controller 100 displays the sort/group setting screen on the display 120 and receives the setting of the sort/group function (S77).

When an instruction to execute printing is received, the controller 100 prints the file in accordance with the current setting (S49). When the button of "change number of copies" has not been operated via the operation inputter 130 (S65, NO), the controller 100, upon receiving the instruction to execute printing, prints the file selected in S42 as it is (S49).

As described above, when the setting of the number of copies is not one, the sort/group button remains inactive, whereas when the setting of the number of copies is one, the sort/group button is activated (S75) in response to the operation with respect to the button of "change number of copies" (activation of the function of "change number of copies"). This is because of the following reasons.

When the number of copies being set in the file is more than one, the setting of the sort/group function is also included in the file, and it is normally unnecessary to change the setting of the sort/group function even when the number of copies is changed. Thus, since it is unnecessary to operate the sort/group button, the inactive state of the sort/group button is maintained.

On the other hand, when the number of copies that is set in a file is one, it is highly likely that the setting regarding the sort/group function which is a function for treating a plurality of copies is not included in the file, or the setting regarding the sort/group function remains the same as the initial value; therefore, when the number of copies is changed from one, it is highly likely that the setting regarding the sort/group function is made (changed). Thus, since it is necessary to operate the sort/group button, the sort/group button is made to be active.

In S75, the description is given assuming that the sort/group button is switched to the active state in response to switching the state of the number-of-copies input field to the active state, but instead of this, the sort/group button may be switched to the active state in response to the setting of the number of copies of more than one to the number-of-copies input field after the state of the number-of-copies input field being switched to the active state. The reason for the sort/group button not being switched to the active state when the number of copies set in the number-of-copies input field is one is that neither the sort function nor the group function is executed when the number of copies is one due to the nature of the functions.

### 2.3 Screen Example of Hold Print Processing in Second Embodiment

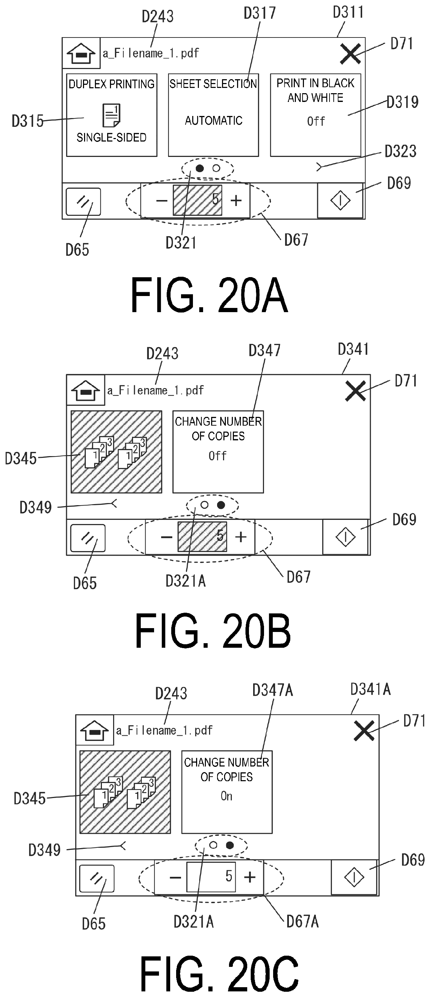

A screen D311 of FIG. 20A is an example of a print setting screen in the hold print processing that is displayed on the display 120 of the MFP 10 according to the second embodiment of the disclosure. The screen D311 is an example of a case where a setting for printing five copies is made for a job to print a file "a_Filename_1.pdf' displayed in a filename display D243. The screen D311 is the first page of the print setting screen of two pages in total.

The screen D311, similar to the print setting screen D241 of the hold print processing in the first embodiment, includes a button D65, a number-of-copies input field D67, buttons D69 and D71, and the filename display D243. The button D65, the number-of-copies input field D67, the buttons D69 and D71, and the filename display D243 are as described before. In FIG. 20A, the number-of-copies input field D67 is displayed in the inactive state; in the drawing, the numerical value input field is hatched with diagonal lines to indicate the inactive state. In the numerical value input field of the number-of-copies input field D67, "5" is displayed. Further, the screen D311 includes buttons D315, D317 and D319, a page display D321, and an arrow D323. In the screen D311, instead of the buttons D315 and D317, a button for turning on and off the "delete after print" function similar to the button D247 of FIG. 13C and a button for deleting the selected file similar to the trash box button D251 of FIG. 13C may be provided.

The button D315 is a button for instructing a transition to a duplex print setting screen (screen D101) for setting whether or not to perform duplex printing. When the duplex printing is set, "DUPLEX" is displayed below the button D315; when the setting of not performing duplex printing (performing single-sided printing) is made, "SINGLE-SIDED" is displayed below the button D315. The button D315 is similar to the button D55 of the first embodiment.

The button D317 is a button for instructing the transition to the sheet selection screen (screen D141) for the setting related to sheet selection. The button D317 is similar to the button D57 of the first embodiment.

The button D319 is a button similar to the button D245, and is a button for turning on and off the function of "print in black and white".

The page display D321 is a UI component similar to the page display D9, and indicates the number of pages constituting the print setting screen of the hold print processing and the page number of the print setting screen that is currently displayed. One white circle and one black circle surrounded by a broken line in FIG. 20A indicate that the print setting screen is composed of two pages (1 + 1). The black circle indicates the page currently displayed, and in FIG. 20A, it is indicated that the screen D311 displays the first page.

The arrow D323 is a UI component for changing the displayed print setting screen from the first page to the second page. When the arrow 323 is operated via the operation inputter 130, the controller 100 displays a screen D341, which is the second page of the print setting screen, on the display 120.

The screen D341 of FIG. 20B is another example of the print setting screen in the hold print processing that is displayed on the display 120 of the MFP 10 according to the second embodiment of the disclosure. The screen D341 is the second page of the print setting screen of two pages in total. The screen D341 of FIG. 20B is an example of a case where a setting for printing a plurality of number of copies (here, five copies) is made for a job to print the file "a_Filename_1.pdf" displayed in the filename display D243.

The screen D341 includes, in addition to the button D65, the number-of-copies input field D67, the buttons D69 and D71, and the filename display D243, buttons D345 and D347, a page display D321A, and an arrow D349.

The button D345, similar to the button D85, is a UI component corresponding to the setting item "sort/group". In FIG. 20B, the button D345 is in the inactive state; in the drawing, the inside of an outer frame of the button D345 is hatched with diagonal lines to indicate the inactive state.

The button D347 is a button, similar to the button D249, for enabling/disabling (turning on/off) the function of "change number of copies". The default value of the "change number of copies" function is "OFF", and in FIG. 20B, "OFF" is displayed at the center of the button D347 to indicate that the "change number of copies" function is turned off.

The page display D321A is similar to the page display D321 described above, but the black circle is arranged on the right side corresponding to the fact that the screen D341 is the second page of the print setting screen.

The arrow D349 is a UI component for changing the displayed print setting screen from the second page to the first page. When the arrow 349 is operated via the operation inputter 130, the controller 100 displays the screen D311, which is the first page of the print setting screen, on the display 120.

A screen D341A of FIG. 20C is another example of the print setting screen in the hold print processing that is displayed on the display 120 of the MFP 10 according to the second embodiment of the disclosure. When the button D347 is operated via the operation inputter 130 and the "change number of copies" function is enabled on the screen D341, the controller 100 displays the screen D341A on the display 120. On the screen D341A, a button D347A is displayed instead of the button D347. Further, on the screen D341A, a number-of-copies input field D67A is displayed instead of the number-of-copies input field D67.

In response to the operation with respect to the button D347 via the operation inputter 130, the controller 100 turns on the function of "change number of copies" and switches the display of "OFF" at the center of the button to the display of "ON". Further, the controller 100 switches, in addition to switching the display from the button D347 to the button D347A, the number-of-copies input field D67 in the inactive state to the number-of-copies input field D67A in the active state. The number-of-copies input field D67A in the active state is displayed in a normal state (display without hatching).

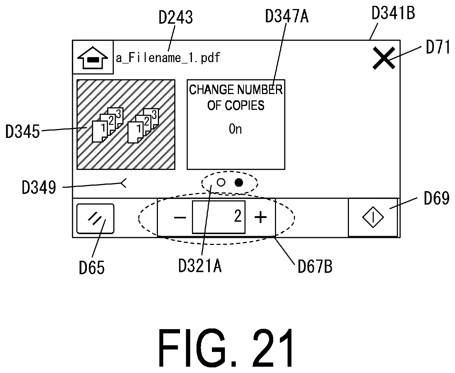

A screen D341B of FIG. 21 is another example of the print setting screen in the hold print processing that is displayed on the display 120 of the MFP 10 according to the second embodiment of the disclosure. After the numerical value "5" in the numerical value input field of the number-of-copies input field D67A is changed to "2" in the screen D341A via the operation inputter 130, a number-of-copies input field D67B, in which the numerical value in the numerical value input field is changed to "2", is displayed as in the screen D341B.

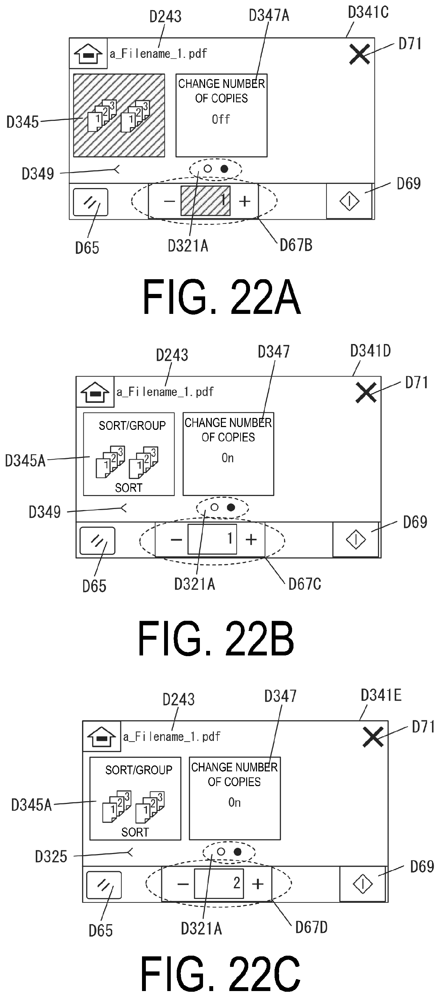

A screen D341C of FIG. 22A is an example of a case where a setting for printing one copy is made for a job to print the file "a_Filename_1.pdf' displayed in the filename display D243. Since the number of copies set for the job is one, a numerical value "1 " is displayed in the number-of-copies input field D67B. When the number of copies to be printed is one, it is unnecessary to set the sort/group function, and therefore the button D345 corresponding to the sort/group function is in the inactive state and displayed being grayed out. The letters "OFF" indicating that the "change number of copies" function is turned off are displayed on the button D347A corresponding to the on/off setting of the "change number of copies" function. Since the "change number of copies" function is turned off, the number-of-copies input field D67B is in the inactive state and displayed being grayed out.

When the button D347A is operated on the screen D341C, the screen transitions to a screen D341D of FIG. 22B. In response to the operation with respect to the button D347A on the screen D341C, the "change number of copies" function is switched from the off state to the on state, and the button D347, on which the display of "OFF" at the center of the button is switched to the display of "ON", is displayed on the screen D341D. In addition, in response to the "change number of copies" function being turned on, the number-of-copies input field D67B in the inactive state in the screen D341C is changed to a number-of-copies input field D67C in the active state in the screen D341D.

When the number of copies to be printed is changed from one, the necessity (possibility) of setting the sort/group function arises. In preparation for this, a button D345A in the active state is displayed on the screen D341D instead of the button D345 in the inactive state on the screen D341C. In the screen D341D, the letters "SORT" indicating that the sort is set are displayed on the button D345A. The screen when the numerical value "1" in the numerical value input field of the number-of-copies input field D67C is changed to "2" on the screen D341D is a screen D341E of FIG. 22C.

2.4 Operation Example of USB Direct Print Processing in Second Embodiment An operation example of the USB direct print processing of the second embodiment is the same as the operation example of the USB direct print processing of the first embodiment. Refer to "1.12 Operation Example of USB Direct Print Processing in First Embodiment" described above.

### 2.5 Operation Example of Hold Print Processing in Second Embodiment

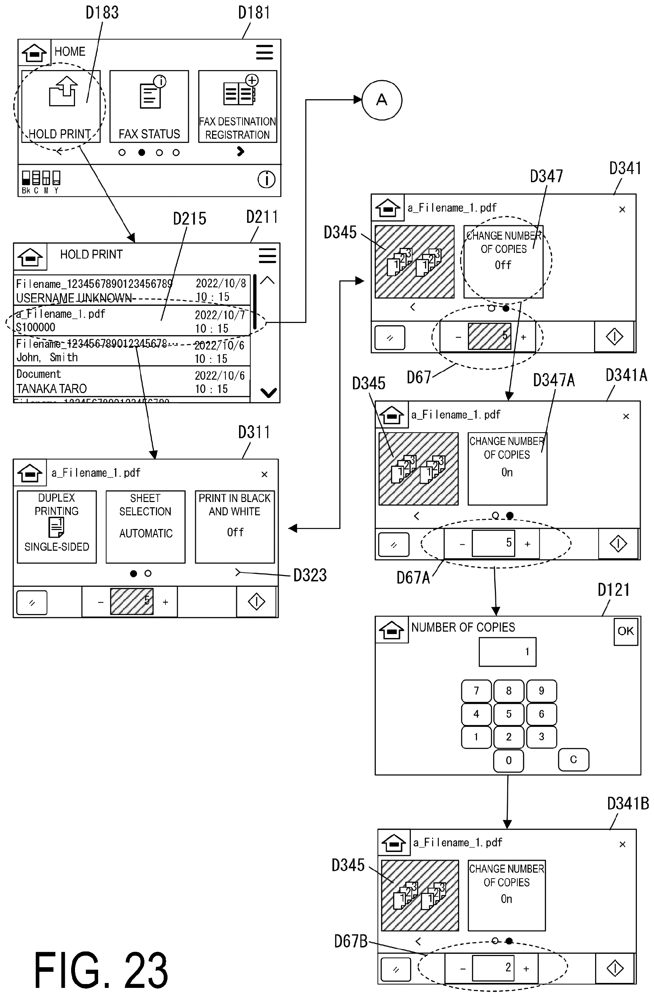

FIG. 23 is a diagram for describing an example of screen transition that the MFP 10 according to the second embodiment of the disclosure displays on the display 120 in the hold print processing. Hereinafter, it is assumed that the screen is displayed on the display 120 and user's operations are performed via the operation inputter 130.

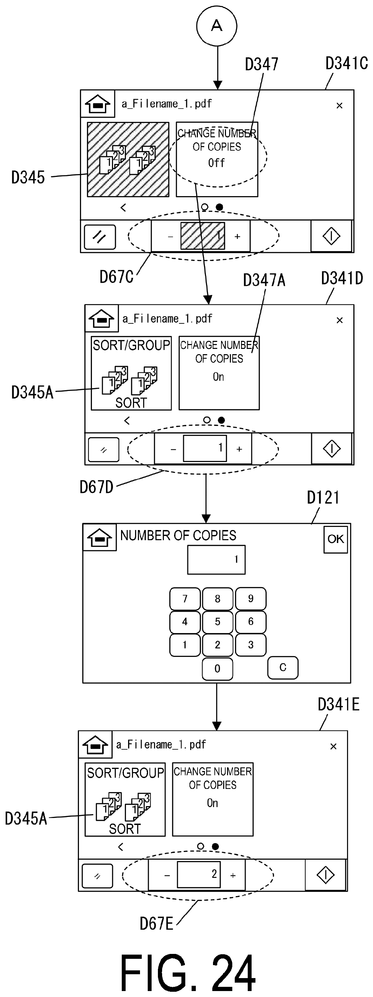

When the user operates the button D183 while the home screen D181 is displayed on the display 120, the controller 100 causes the screen D211 to be displayed. When the user performs the operation of selecting the filename display D215 while the screen D211 is displayed, the controller 100 determines whether the setting of the number of copies of the held job related to the file is one copy or two or more copies. When the setting of the number of copies is one copy, the process proceeds to a screen transition in FIG. 24 to be described below.

2.5.1 Case of Number-of- Copies Set for Held Job Being Plural

When the setting of the number of copies for the held job is two or more (five in this case), the controller 100 displays the screen D311, which is the first page of the print setting screen. When the user performs the operation of selecting the arrow D323 on the print setting screen D311, the controller 100 causes the screen D341, which is the second page of the print setting screen, to be displayed.

In the hold print processing, since the number of copies to be printed is set basically in the client terminal 30, it is normally unnecessary to set the number of copies to be printed in the MFP 10. Therefore, "OFF" indicating the default value of the "change number of copies" function is displayed on the button D347 of the screen D341. Since the "change number of copies" function is turned off, the numerical value of the number of copies cannot be input (changed). Because of this, the number-of-copies input field D67 is in the inactive state, and does not accept the operation of the user. This prevents the setting of the number of copies to be printed from being changed by an erroneous operation of the user.

In the hold print processing in which the number of copies to be printed of the held job is set to be plural, the sort/group setting is normally made in the client terminal 30. Therefore, it is unnecessary to set the sort/group in MFP 10, and the button D345 of the screen D341 is in the inactive state.

When the user operates the button D347 to turn on the "change number of copies" function on the screen D341, the button D347A indicating that the "change number of copies" function is "ON" is displayed as in the screen D341A. At this time, the number-of-copies input field D67, which is in the inactive state in the screen D341, is changed to be in the active state like the number-of-copies input field D67A.

The number-of-copies input field D67A is in the active state, and thus the operation of the user can be accepted. When the user's operation with respect to the numerical value input field of the number-of-copies input field D67A is received, the controller 100 displays the number-of-copies setting screen D121 and receives the input of the desired number of copies (here, two) of the user. To change the numerical value input field of the number-of-copies input field D67A, the user may directly input a desired numerical value on the number-of-copies setting screen D121, or may increase or decrease the numerical value in the numerical value input field by one through operating a plus (+) button or a minus (-) button provided in the number-of-copies input field D67A without displaying the number-of-copies setting screen D121.

After the number of copies "2" is set on the number-of-copies setting screen D121 or the number-of-copies input field D67A, the screen D341B is displayed. In the hold print processing in which the number of copies set for the held job is plural, the sort/group setting is normally maintained even when the setting of the number of copies is changed. Because of this, in the hold print processing in which the number of copies set for the held job is plural, even when the "change number of copies" button D347 is operated on the screen D341, the button D345 in the screens D341A and D341B remains inactive.

### 2.5.2 Case of Number-of- Copies Set for Held Job Being Singular

FIG. 24 is a diagram for describing an example of screen transition that the MFP 10 according to the second embodiment of the disclosure displays on the display 120 in the hold print processing, and is a diagram for describing an example of the screen transition of a case where the number of copies set for a held job is one copy.

In a case where the number of copies set for the held job is one copy related to the file selected by the user on the screen D211, the screen D211 transitions to the screen D341C. In the screen D341C, the button D347 related to the "change number of copies" function is displayed with "OFF". The number-of-copies input field D67C is in the inactive state, and "1" corresponding to the setting of the number of copies is displayed in the numerical value input field. The button D345A related to the sort/group setting is in the inactive state.

When the user operates the button D347 on the screen D341C to change the "change number of copies" function from OFF to ON, the screen D341C transitions to the screen D341D. The button D347A with the "change number of copies" function turned on is displayed on the screen D341D.

In response to the "change number of copies" function being turned on, the number-of-copies input field D67C being in the inactive state on the screen D341C is displayed as the number-of-copies input field D67D in the active state on the screen D341D.

Differing from the button D345 of the screen D341A in "2.5.1 Case of Number-of- Copies Set for Held Job Being Plural" described above, the button D345A with the sort/group setting being active is displayed on the screen D341D. When the number of copies set for the held job is plural, the sort/group setting has been made in the client terminal 30, and the button D345 does not need to be activated. On the other hand, when the number of copies set for the held job is singular, there is a possibility that the sort/group setting has not been made in the client terminal 30, and therefore the sort/group setting needs to be made in the MFP 10. Thus, when the number of copies set for the held job is singular, the button D345 is activated to be the button D345A in response to the turning-on of the "change number of copies" function. The letters "SORT" indicating the default value of the sort/group setting are displayed on the button D345A.

When the user operates the number-of-copies input field D67D on the screen D341D, the screen D341D transitions to the screen D121. When the user inputs the numerical value "2" on the screen D121, the screen D121 transitions to the screen D341E. On the screen D341E, "2" is displayed in the numerical value input field of a number-of-copies input field D67E in accordance with the numerical value input by the user. In the example of the above screen transition, since the user has not changed the sort/group setting, the screen D341E, similar to the screen D341D, displays the button D345A.

### 2.6 Summary

According to the second embodiment, the display of the UI components (sort/group setting buttons D345 and D345A) related to sorting of printed matter is controlled depending on whether the number of copies set for a held job related to a file selected as a target of the hold print processing is one copy or two or more copies. With this, when the number of copies set for the held job is changed in the hold print processing, the setting of the sort function accompanying the change can be made.

According to the second embodiment, in the print setting screens (screens D341, D341A, and D341B) related to the print function ("2.5.1 Case of Number-of- Copies Set for Held Job Being Plural") of the file including information regarding the sorting of the printed matter, the UI component (button D345) for setting a sorting method of the printed matter is displayed in the inactive state. In this case, the button D345 or a UI component equivalent thereto may be hidden on the screen. When the number of copies set for the held job is plural, it is unnecessary to set the sorting method, and thus the UI component related to the sorting method may be in the inactive state or may be hidden. In this manner, by deactivating or hiding the UI components unnecessary for the setting, the operability of the function setting can be improved.

According to the second embodiment, in the print setting screen (screen D341C) related to the print function ("2.5.2 Case of Number-of- Copies Set for Held Job Being Singular") of the file unlikely to include the information regarding the sorting of the printed matter, when the number of copies to be printed is changed from one copy to a plurality of copies in a state in which the UI component (button D345) for setting a sorting method of the printed matter is displayed in the inactive state, the UI component (button D345) for setting the sorting method of the printed matter is changed to be in the active state. Instead of changing the UI component (button D345) from the inactive state to the active state, the UI component may be changed from the non-display state to the display state. With this, only in a case where the number of copies to be printed is changed from one to a plurality of copies, the sort function accompanying the change can be set.

According to the second embodiment, in the USB direct print processing, since the print target file is a file that does not include information about sorting of the printed matter, it is preferable to always display the UI component related to sorting in the active state on the print setting screen (screen D81). In this manner, the UI component related to sorting is displayed in accordance with the necessity of the sort setting, thereby making it possible to improve operability for the user.

### 3. Variation

The disclosure is not limited to the embodiments and variations described above, and various variations are possible. In other words, the technical scope of the disclosure also includes embodiments obtained by combining technical means that are appropriately modified within the scope of the gist of the disclosure. Configurations of the disclosure sought to be patented are set forth in the appended claims, but configurations not recited in the claims are not intended to be excluded from the technical scope.

In the above-described specification, the descriptions "in a case in which ..." and "when ..." are described as examples, and the configuration is not limited to the described contents. Configurations not indicated by the descriptions "in a case in which ..." and "when ..." are also disclosed to the extent that the configurations are obvious to those skilled in the art, and the rights thereof are intended to be acquired.

The processing and the flow of data have been described herein in order, but the order thereof is not limited to the described order. For example, a configuration in which processing is partly removed or the order is rearranged is also disclosed, and the right thereof is intended to be acquired.

Further, although the above-described embodiments are described separately for convenience of description, it is obvious that the embodiments may be executed in combination within a technically possible scope.

The programs running on each device in the embodiment are programs for controlling a CPU or the like (programs for causing a computer to function) to implement the aforementioned functions in the embodiment. Information handled by these apparatuses is temporarily accumulated in a temporary storage apparatus (for example, a RAM) during processing, and is then stored in storage apparatuses such as various Read Only Memories (ROM), HDDs, and Solid State Drives (SSD), and is read, modified, and written by a CPU, as necessary.

Here, the recording medium storing the programs may be any of a semiconductor medium (e.g., a ROM or a nonvolatile memory card), an optical recording medium or a magneto-optical recording medium (e.g., a Digital Versatile Disc (DVD), a Magneto Optical disc (MO), a Mini Disc (MD), a Compact Disc (CD), or a Blu-ray (trade name) Disc (BD)), a magnetic recording medium (e.g., a magnetic tape or a flexible disk), and the like. Further, not only are the functions of the above-described embodiments enabled by executing the loaded program, but the functions of the disclosure may also be enabled by processing in cooperation with an operating system or another application program or the like, based on instructions from the program.

Further, when a program is distributed in a market, the program can be stored in a portable recording medium and distributed, or can be transferred to a server computer connected via a network such as the Internet. In this case, it is obvious that a storage apparatus of the server computer is also included in the disclosure.

### Reference Signs List

1 System
10 Multi-function peripheral/printer (MFP)
20 USB flash drive
30 Client terminal
100 Controller
100A USB direct print processor
100B Hold print processor
110 Storage
110A Read only memory (ROM)
110B Random access memory (RAM)
110C Storage device
110-1 USB direct print setting storage area
110-3 Hold print setting storage area
110-5 Hold print data storage area
120 Display
130 Operation inputter
140 Communicator
150 Connector
160 Image inputter
170 Image former
NW Network

## Claims

1. An image forming apparatus (10) that is equipped with a plurality of print functions for printing a file selected on an operation screen, the image forming apparatus (10) comprising:
one or more controllers (100); and
a display (120), wherein
the one or more controllers (100) display a plurality of setting screens, respectively corresponding to the plurality of print functions on the display (120), and
at least one of the plurality of setting screens includes a first User Interface (UI) component related to a setting of enabling or disabling a function for setting the number of copies to be printed, and a second UI component related to a setting of the number of copies to be printed.

2. The image forming apparatus (10) according to claim 1,
wherein the second UI component is displayed in a state in which a setting change of the number of copies to be printed is not allowed in a case where the function for setting the number of copies to be printed is not enabled.

3. The image forming apparatus (10) according to claim 1,
wherein a numerical value is displayed in the second UI component in response to enabling of the function for setting the number of copies to be printed.

4. The image forming apparatus (10) according to claim 1,
wherein the plurality of setting screens include a first UI non-display setting screen that displays the second UI component without displaying the first UI component.

5. The image forming apparatus (10) according to claim 4,
wherein the one or more controllers (100) display the second UI component on the first UI non-display setting screen in a state in which a setting change of the number of copies to be printed is allowed.

6. The image forming apparatus (10) according to claim 4 or 5,
wherein a numerical value is displayed in the second UI component.

7. A control method for an image forming apparatus (10) including a display (120) and equipped with a plurality of print functions for printing a file selected on an operation screen, the method comprising:
displaying a plurality of setting screens, respectively corresponding to the plurality of print functions on the display (120), wherein
at least one of the plurality of setting screens includes a first User Interface (UI) component related to a setting of enabling or disabling a function for setting the number of copies to be printed, and a second UI component related to a setting of the number of copies to be printed.
